# EUROPEAN PATENT APPLICATION

(11) **EP 4 827 060 A1**
(43) Date of publication of application: **21.10.2026**
(21) Application number: 24918297.3
(22) Date of filing: 17.12.2024
(51) Int. Cl.: H04L 27/26

(54) **COMMUNICATION METHOD AND COMMUNICATION APPARATUS**

(30) Priority: 18.01.2024 CN 202410077902
(71) Applicant: Huawei Technologies Co., Ltd., Shenzhen, Guangdong 518129 (CN)
(72) Inventor: WEN, Shan, Shenzhen, Guangdong 518129 (CN); HUANG, Huang, Shenzhen, Guangdong 518129 (CN)
(74) Representative: Goddar, Heinz J.
(86) International application number: PCT/CN2024/140101
(87) International publication number: WO 2025/152689

(57) **Abstract**

This application provides a communication method and a communication apparatus. The method includes: determining a transmission waveform of a signal, where the transmission waveform is related to a threshold of a first parameter, and the first parameter includes a modulation order and a roll-off factor, where the transmission waveform is a quadrature amplitude modulation discrete Fourier transform-spread-orthogonal frequency division multiplexing QAM DFT-s-OFDM waveform or an offset quadrature amplitude modulation discrete Fourier transform-spread-orthogonal frequency division multiplexing OQAM DFT-s-OFDM waveform, and the roll-off factor is determined based on a transmission bandwidth and a quantity of symbols carried **in** the transmission waveform; and transmitting or obtaining the signal based on the transmission waveform. **In** the method provided **in** this application, a network device or a terminal device can determine the transmission waveform of the signal based on a specified threshold of the modulation order and a specified threshold of the roll-off factor, so that higher output power of a power amplifier can be supported, and larger signal coverage can be obtained.

## Description

This application claims priority to Chinese Patent Application No. 202410077902.9, filed with the China National Intellectual Property Administration on January 18, 2024 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

A power amplifier (power amplifier, PA) generally has a linear dynamic range. Within this range, an output signal power of the amplifier increases linearly with an input signal power. That is, a ratio of the output signal power to the input signal power (also referred to as a power gain) remains unchanged, and is a fixed value. When the input signal power continues to increase and exceeds a critical value, the amplifier enters a non-linear region, the power gain gradually decreases, that is, the gain is compressed, and the output signal power will no longer continue to increase with the increase of the input signal power, but tends to be saturated. When the input signal power is close to or exceeds a saturation input power, the PA generates non-linear distortion, for example, spectrum spread or spectrum regeneration. Spectrum regeneration causes mutual interference between subcarriers, resulting in an increase in a bit error rate. In addition, spectrum regeneration also increases interference to an adjacent channel user.

A peak to average power ratio (peak to average power ratio, PAPR) reflects a fluctuation degree of a signal envelope or amplitude. When the PAPR is excessively high, a signal output by the PA is easily distorted. To ensure that a receiving end can normally parse a signal, the average power needs to be reduced. However, this causes low efficiency of the power amplifier, or equivalently, decreased signal coverage. Therefore, to meet a signal coverage requirement, a signal generation technology with a low PAPR needs to be selected. Generally, a PAPR of a signal generated when quadrature amplitude modulation QAM is used is higher than a PAPR of a signal generated when offset quadrature amplitude modulation OQAM is used.

A next-generation wireless communication network relates to a plurality of new scenarios and corresponding new transmission requirements. For example, in an environment reconstruction scenario, a sensing device may scan an object in an environment and transmit data, and a higher supported power helps improve sensing performance. In an extremely-high-frequency communication scenario, for example, a terahertz communication scenario, a communication device needs to consider a means like increasing a supported power to resolve a coverage problem on an extremely high frequency. Therefore, how to effectively improve performance indicators and signal coverage in next-generation wireless communication is a problem currently requiring attention.

### SUMMARY

This application provides a communication method and a communication apparatus. According to the method and the apparatus, an effective range of a radio frequency component like a power amplifier can be better used to achieve technical effects such as improving signal coverage, improving energy saving, and reducing implementation complexity.

According to a first aspect, a communication method is provided. The method provided in the first aspect may be performed by a first communication device. Unless otherwise specified, the "first communication device" in this application may be the first communication device (for example, a network device or a terminal device), or may be a component (for example, a processor, a chip, or a chip system) in the first communication device, or may be a logical module or software that can implement all or a part of functions of the first communication device. An execution body of the communication method is not limited in this application.

Specifically, the method includes: determining a transmission waveform of a signal, where the transmission waveform is related to a threshold of a first parameter, and the first parameter includes a modulation order and a roll-off factor, where the transmission waveform is a quadrature amplitude modulation discrete Fourier transform-spread-orthogonal frequency division multiplexing QAM DFT-s-OFDM waveform or an offset quadrature amplitude modulation discrete Fourier transform-spread-orthogonal frequency division multiplexing OQAM DFT-s-OFDM waveform, and the roll-off factor is determined based on a transmission bandwidth and a quantity of symbols carried in the transmission waveform; and transmitting or obtaining the signal based on the transmission waveform.

According to the communication method provided in the first aspect, a communication device can determine the transmission waveform of the signal based on a specified threshold of the modulation order and a specified threshold of the roll-off factor, to determine whether the OQAM DFT-s-OFDM waveform needs to be used for signal transmission. The threshold of the modulation order and the threshold of the roll-off factor may reflect an output back-off OBO gain of a power amplifier PA of the OQAM DFT-s-OFDM waveform compared with that of the QAM DFT-s-OFDM waveform. If there is no OBO gain or the OBO gain is less than a threshold, a protocol does not need to be modified, and the existing QAM DFT-s-OFDM waveform may be used for signal transmission. If the OBO gain is greater than a threshold, the OQAM DFT-s-OFDM waveform is used, so that a higher output power of the PA can be supported, and larger signal coverage can be obtained. In an integrated sensing and communication scenario (for example, sensing user equipment UE, a building, or another physical structure in an environment), supporting a higher output power of the PA also helps obtain a stronger echo signal.

The threshold of the modulation order and the threshold of the roll-off factor may be determined based on the OBO gain. That is, when the OQAM DFT-s-OFDM waveform is used for signal transmission, the OBO gain exceeds the threshold; and when there is no OBO gain or the OBO gain is less than the threshold, existing signal generation and demodulation manners may continue to be used.

In a possible implementation of the first aspect, when a value of the modulation order is less than or equal to a first threshold of the modulation order, and a value of the roll-off factor is greater than or equal to a first threshold of the roll-off factor, the transmission waveform is the OQAM DFT-s-OFDM waveform.

In this implementation, when the value of the modulation order is less than or equal to the first threshold of the modulation order, and the value of the roll-off factor is greater than or equal to the first threshold of the roll-off factor, it indicates that the OBO gain is greater than the threshold, and the OQAM DFT-s-OFDM waveform is used for signal transmission, to obtain a higher output power of the power amplifier PA.

Optionally, when the value of the modulation order is less than or equal to the first threshold of the modulation order, a spectrum emission mask SEM is a dominant (or decisive) factor in an OBO value; and when the value of the roll-off factor is greater than or equal to the first threshold of the roll-off factor, it may indicate that the OBO gain is greater than the threshold, and the OQAM DFT-s-OFDM waveform is used for signal transmission.

For example, the first threshold of the modulation order may be 2. When the first threshold of the modulation order is 2, a modulation and coding scheme MCS index corresponds to low-order modulation, for example, quadrature amplitude modulation QPSK, and the SEM may be a dominant factor in the OBO value. For example, the first threshold of the roll-off factor may be set to 0.4. In this case, when the value of the roll-off factor is greater than or equal to 0.4, the OQAM DFT-s-OFDM waveform is used for signal transmission.

Optionally, when the value of the modulation order is less than or equal to the first threshold of the modulation order, an occupied bandwidth OBW may be a dominant factor in an OBO value; and when the value of the roll-off factor is greater than or equal to the first threshold of the roll-off factor, it may indicate that the OBO gain is greater than the threshold, and the OQAM DFT-s-OFDM waveform is used for signal transmission.

For example, the first threshold of the modulation order may be 2. When the first threshold of the modulation order is 2, an MCS index corresponds to low-order modulation, and the OBW may be a dominant factor in the OBO value. For example, the first threshold of the roll-off factor may be set to 0.333. In this case, when the value of the roll-off factor is greater than or equal to 0.333, the OQAM DFT-s-OFDM waveform is used for signal transmission.

Optionally, when the value of the modulation order is less than or equal to the first threshold of the modulation order, in-band emission IBE may be a dominant factor in an OBO value; and when the value of the roll-off factor is greater than or equal to the first threshold of the roll-off factor, it may indicate that the OBO gain is greater than the threshold, and the OQAM DFT-s-OFDM waveform is used for signal transmission.

For example, the first threshold of the modulation order may be 2. When the first threshold of the modulation order is 2, an MCS index corresponds to low-order modulation, and the IBE may be a dominant factor in the OBO value. For example, the first threshold of the roll-off factor may be set to 0.8. In this case, when the value of the roll-off factor is greater than or equal to 0.8, the OQAM DFT-s-OFDM waveform is used for signal transmission.

In a possible implementation of the first aspect, when the value of the modulation order is less than or equal to the first threshold of the modulation order, and the value of the roll-off factor is less than the first threshold of the roll-off factor, the transmission waveform is the QAM DFT-s-OFDM waveform.

In this implementation, when the value of the modulation order is less than or equal to the first threshold of the modulation order, and the value of the roll-off factor is less than the first threshold of the roll-off factor, it indicates that there is no OBO gain or the OBO gain is less than the threshold. In this case, the existing QAM DFT-s-OFDM waveform is used, and a small modification is made to a protocol.

Optionally, when the value of the modulation order is less than or equal to the first threshold of the modulation order, an SEM is a dominant factor in an OBO value; and when the value of the roll-off factor is less than the first threshold of the roll-off factor, it indicates that there is no OBO gain or the OBO gain is less than the threshold, and the QAM DFT-s-OFDM waveform is used for signal transmission.

For example, the first threshold of the modulation order may be 2. When the first threshold of the modulation order is 2, an MCS index corresponds to low-order modulation, and the SEM may be a dominant factor in the OBO value. For example, the first threshold of the roll-off factor may be set to 0.4. In this case, when the value of the roll-off factor is less than 0.4, the QAM DFT-s-OFDM waveform is used for signal transmission.

Optionally, when the value of the modulation order is less than or equal to the first threshold of the modulation order, an OBW may be a dominant factor in an OBO value; and when the value of the roll-off factor is less than the first threshold of the roll-off factor, it indicates that there is no OBO gain or the OBO gain is less than the threshold, and the QAM DFT-s-OFDM waveform is used for signal transmission.

For example, the first threshold of the modulation order may be 2. When the first threshold of the modulation order is 2, an MCS index corresponds to low-order modulation, and the OBW may be a dominant factor in the OBO value. For example, the first threshold of the roll-off factor may be set to 0.333. In this case, when the value of the roll-off factor is less than 0.333, the QAM DFT-s-OFDM waveform is used for signal transmission.

Optionally, when the value of the modulation order is less than or equal to the first threshold of the modulation order, IBE may be a dominant factor in an OBO value; and when the value of the roll-off factor is less than the first threshold of the roll-off factor, it indicates that there is no OBO gain or the OBO gain is less than the threshold, and the QAM DFT-s-OFDM waveform is used for signal transmission.

For example, the first threshold of the modulation order may be 2. When the first threshold of the modulation order is 2, an MCS index corresponds to low-order modulation, and the IBE may be a dominant factor in the OBO value. For example, the first threshold of the roll-off factor may be set to 0.8. In this case, when the value of the roll-off factor is less than 0.8, the QAM DFT-s-OFDM waveform is used for signal transmission.

In a possible implementation of the first aspect, the first threshold of the roll-off factor is related to a threshold of a transmission bandwidth factor.

It should be understood that the threshold of the transmission bandwidth factor indicates that a signal is transmitted through broadband or narrowband. A first threshold of the roll-off factor when the signal is transmitted through the broadband may be different from a first threshold of the roll-off factor when the signal is transmitted through the narrowband.

It should be further understood that the transmission bandwidth factor may be determined based on a ratio of the transmission bandwidth to a maximum transmission bandwidth allowed within a channel bandwidth.

For example, the threshold of the transmission bandwidth factor may be set to 0.6. When a value of the transmission bandwidth factor is greater than 0.6, it indicates broadband transmission; or when a value of the transmission bandwidth factor is less than 0.6, it indicates narrowband transmission. Considering that a frequency range is 2-2 (FR2-2), the channel bandwidth is 800 MHz, and a subcarrier spacing is 960 kHz, in this case, the maximum transmission bandwidth is 62 physical resource blocks RBs. When the transmission bandwidth is 60 RBs, the value of the transmission bandwidth factor is 60/62=0.968, indicating broadband transmission. When the SEM is a dominant factor in the OBO value, when a signal is transmitted through narrowband, for example, the first threshold of the roll-off factor may be 0.2; or when a signal is transmitted through broadband, the first threshold of the roll-off factor may be 0.4.

In a possible implementation of the first aspect, when a value of the modulation order is greater than or equal to a second threshold of the modulation order, and a value of the roll-off factor is greater than or equal to a second threshold of the roll-off factor, the transmission waveform is the OQAM DFT-s-OFDM waveform.

In this implementation, when the value of the modulation order is greater than or equal to the second threshold of the modulation order, and the value of the roll-off factor is greater than or equal to the second threshold of the roll-off factor, it indicates that the OBO gain is greater than the threshold, and the OQAM DFT-s-OFDM waveform is used for signal transmission, to obtain a better OBO gain.

Optionally, when the value of the modulation order is greater than or equal to a first threshold of the modulation order, an error vector magnitude EVM is a dominant factor in an OBO value; and when the value of the roll-off factor is greater than or equal to a first threshold of the roll-off factor, it may indicate that the OBO gain is greater than the threshold, and the OQAM DFT-s-OFDM waveform is used for signal transmission.

For example, the second threshold of the modulation order may be 4. When the first threshold of the modulation order is 4, an MCS index corresponds to medium-order modulation or high-order modulation, for example, 16 quadrature amplitude modulation (16QAM) or 64QAM, and the EVM is a dominant factor in the OBO value. For example, the first threshold of the roll-off factor may be set to 0.4. In this case, when the value of the roll-off factor is greater than or equal to 0.4, the OQAM DFT-s-OFDM waveform is used for signal transmission.

In a possible implementation of the first aspect, when the value of the modulation order is greater than or equal to the second threshold of the modulation order, and the value of the roll-off factor is less than the second threshold of the roll-off factor, the transmission waveform is the QAM DFT-s-OFDM waveform.

In this implementation, when the value of the modulation order is greater than or equal to the second threshold of the modulation order, and the value of the roll-off factor is less than the second threshold of the roll-off factor, it indicates that when an EVM is a dominant factor in an OBO value, there is no OBO gain or the OBO gain is less than the threshold. In this case, the existing QAM DFT-s-OFDM waveform is used, and a small modification is made to a protocol.

Optionally, when the value of the modulation order is greater than or equal to the second threshold of the modulation order, the EVM is a dominant factor in the OBO value; and when the value of the roll-off factor is less than the second threshold of the roll-off factor, it indicates that there is no OBO gain or the OBO gain is less than the threshold, and the QAM DFT-s-OFDM waveform is used for signal transmission.

For example, the second threshold of the modulation order may be 4. When the first threshold of the modulation order is 4, an MCS index corresponds to medium-order modulation or high-order modulation, for example, 16 quadrature amplitude modulation (16QAM) or 64QAM, and the EVM is a dominant factor in the OBO value. For example, the first threshold of the roll-off factor may be set to 0.4. In this case, when the value of the roll-off factor is less than 0.4, the QAM DFT-s-OFDM waveform is used for signal transmission.

In a possible implementation of the first aspect, the second threshold of the roll-off factor is related to a threshold of a transmission bandwidth factor.

For example, when the EVM is a dominant factor in the OBO value, when a signal is transmitted through narrowband, the first threshold of the roll-off factor may be 0.35; or when a signal is transmitted through broadband, the first threshold of the roll-off factor may be 0.4.

In a possible implementation of the first aspect, the communication method further includes: sending or receiving first indication information, where the first indication information indicates the transmission waveform, the transmission waveform is related to the threshold of the first parameter, the first parameter includes the modulation order and the roll-off factor, and the roll-off factor is determined based on the transmission bandwidth and the quantity of symbols carried in the transmission waveform.

In this implementation, after determining the transmission waveform of the signal, a network device may send the first indication information to a terminal device through signaling. The first indication information indicates the transmission waveform of the signal, so that the terminal device is enabled to demodulate and obtain the received signal, and does not need to determine, based on a communication parameter, a waveform used for signal transmission.

According to a second aspect, a communication system is provided. The system includes a terminal device and a network device. The terminal device is configured to perform the method according to any one of the first aspect or the possible implementations of the first aspect. The network device may also be configured to perform the method according to any one of the first aspect or the possible implementations of the first aspect.

According to a third aspect, a communication apparatus is provided. The communication apparatus includes units configured to perform steps according to any one of the first aspect or the possible implementations of the first aspect.

According to a fourth aspect, a communication apparatus is provided. The communication apparatus includes at least one processor and a memory. The memory stores program instructions; and when the program instructions stored in the memory are executed by the processor, the method according to any one of the first aspect or the possible implementations of the first aspect is performed.

According to a fifth aspect, a communication apparatus is provided. The communication apparatus includes at least one processor and an interface circuit. The at least one processor is configured to perform the method according to any one of the first aspect or the possible implementations of the first aspect.

According to a sixth aspect, a computer program product is provided. The computer program product includes a computer program. When a part or all of the computer program is executed by a processor, the method according to any one of the first aspect or the possible implementations of the first aspect is performed.

According to a seventh aspect, a computer-readable storage medium is provided. The computer-readable storage medium stores a computer program. When a part or all of the computer program is executed, the method according to any one of the first aspect or the possible implementations of the first aspect is performed.

According to an eighth aspect, a chip is provided. The chip includes a processor, configured to invoke a part or all of a computer program from a memory and run the computer program, to cause a communication device on which the chip is installed to perform the method according to any one of the first aspect or the possible implementations of the first aspect.

### BRIEF DESCRIPTION OF DRAWINGS

FIG. 1 is a typical block diagram of an OFDM system;
FIG. 2 is a diagram of single-carrier modulation;
FIG. 3 is a diagram of DFT-s-OFDM modulation including frequency-domain preprocessing;
FIG. 4 is a diagram of bandwidth extension and FDSS;
FIG. 5a and FIG. 5b are diagrams of OQAM bit mapping;
FIG. 6 is a diagram of a relationship between an input power, an output power, and efficiency of a solid-state power amplifier;
FIG. 7 is a diagram of frequency responses under different roll-off;
FIG. 8 is a diagram of PAPRs of QPSK DFT-s-OFDM and offset QPSK DFT-s-OFDM signals;
FIG. 9 is a diagram of a communication system according to an embodiment of this application;
FIG. 10 is a diagram of structures of a network device 20 and a terminal device 30 according to an embodiment of this application;
FIG. 11a is a diagram of interaction in a communication method 1100(a) according to an embodiment of this application;
FIG. 11b is a diagram of interaction in another communication method 1100(b) according to an embodiment of this application;
FIG. 12 is a diagram of a transmission bandwidth, a channel bandwidth, and a maximum transmission bandwidth;
FIG. 13 is a block diagram of a communication apparatus 1300 according to an embodiment of this application;
FIG. 14 is a block diagram of another communication apparatus 1400 according to an embodiment of this application;
FIG. 15 is a block diagram of a communication apparatus 1500 according to an embodiment of this application;
FIG. 16 is a block diagram of another communication apparatus 1600 according to an embodiment of this application;
FIG. 17 is a diagram of a structure of a terminal device 1700 according to this application;
FIG. 18 is a diagram of a structure of a network device 1800 according to an embodiment of this application; and
FIG. 19 is a diagram of a chip system according to an embodiment of this application.

### DESCRIPTION OF EMBODIMENTS

The following clearly and completely describes the technical solutions in embodiments of this application with reference to the accompanying drawings in embodiments of this application.

The technical solutions in embodiments of this application may be applied to various communication systems, such as a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a future 5th generation (5th Generation, 5G) system, or a new radio (New Radio, NR) system.

A terminal device in embodiments of this application may be referred to as user equipment, an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device, another processing device connected to a wireless modem, a vehicle-mounted device, a wearable device, a terminal device in a future 5G network, a terminal device in a future evolved public land mobile network (public land mobile network, PLMN), or the like. This is not limited in embodiments of this application.

A network device in embodiments of this application may be a device configured to communicate with the terminal device. The network device may be a base transceiver station (base transceiver station, BTS) in a global system for mobile communications (global system for mobile communications, GSM) or a code division multiple access (code division multiple access, CDMA) system, or may be a NodeB (NodeB, NB) in a wideband code division multiple access (wideband code division multiple access, WCDMA) system, or may be an evolved NodeB (evolved NodeB, eNB or eNodeB) in an LTE system, or may be a radio controller in a cloud radio access network (cloud radio access network, CRAN) scenario. Alternatively, the network device may be a relay station, an access point, a vehicle-mounted device, a wearable device, a network device in a future 5G network, a network device in a future evolved PLMN, or the like. This is not limited in embodiments of this application.

In embodiments of this application, the terminal device or the network device may include a hardware layer, and optionally, may further include a software layer running at the hardware layer. The hardware layer may include a processor, and may further include hardware such as a memory management unit (memory management unit, MMU) or a memory (also referred to as a main memory). The software layer stores computer instructions that facilitate implementation of a method according to embodiments of this application. A specific structure or level of an execution body of the method provided in embodiments of this application is not particularly limited in embodiments of this application. As long as the execution body can perform communication based on the method provided in embodiments of this application by running a program that records code of the method provided in embodiments of this application, the execution body can be considered as a terminal device or a network device implementing embodiments of this application. For example, the execution body of the method provided in embodiments of this application may be a communication module (for example, a modem (modem)), a system-on-chip SoC, or another functional module in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, a computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain, and/or carry instructions and/or data.

The following first describes terms used in this application before describing embodiments of this application.

### (1) Channel (channel), multipath (multipath), and delay spread (delay spread, DS)

In a radio system, a medium through which a signal is transmitted from a transmitter to a receiver is referred to as a channel.

Multipath is a propagation phenomenon in which a radio signal arrives at a receiver through two or more paths.

Because a plurality of copies of the transmitted signal propagate for different distances, and the copies arrive at the receiver at different time. A difference between time when a signal arrives at a receiving end through different paths is referred to as a delay spread (delay spread, DS). A difference between arrival time of a last identifiable delay signal and arrival time of a first delay signal is referred to as a maximum delay spread (maximum DS, MDS).

### (2) OFDM

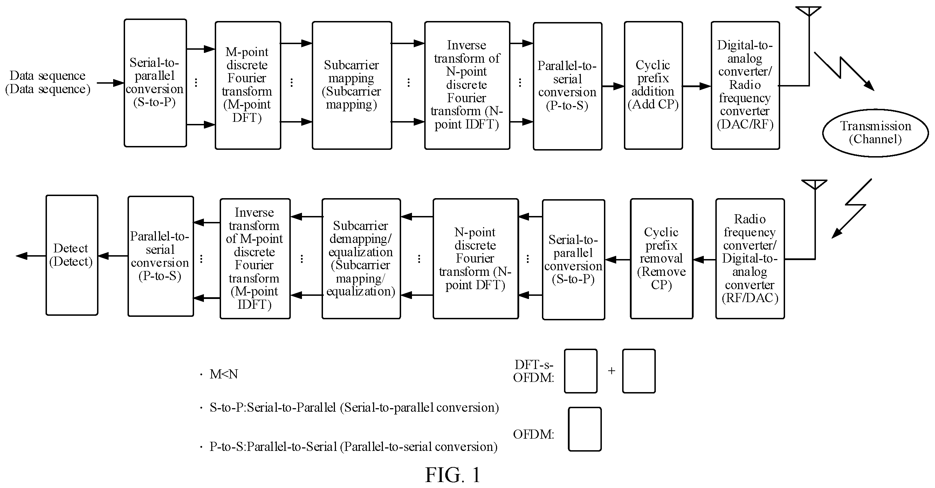

FIG. 1 is a typical block diagram of an OFDM system. As shown in FIG. 1, serial-to-parallel (serial-to-parallel) conversion is performed on a data sequence to convert M consecutive pieces of data into an M-dimensional data block ***s**ₖ* = [*sₖ*[0], *sₖ* [1],···, *sₖ*[*M* - 1]]^{T}, where a subscript k is an OFDM symbol sequence number. Through subcarrier mapping, the M pieces of data carried in **S***ₖ* are used to modulate M subcarriers in N subcarriers, and the remaining (N-M) subcarriers may be understood as being modulated with 0. N-point IFFT is performed on an N-dimensional data vector **X***ₖ* to obtain a group of N complex time-domain sampling points **x***ₖ* = [*xₖ*[0]*,xₖ*[1]*,* ··· *,xₖ*[*N* - 1]]^{T}.

A next important operation for generating an OFDM signal is to insert a protection domain at a start position of each OFDM symbol, to eliminate inter-symbol interference (inter-symbol interference, ISI) caused by multipath propagation. The protection domain is obtained by adding a cyclic prefix (cyclic prefix, CP) at a start position of a symbol. Specifically, the last G sampling points of **x***ₖ* are copied and appended to a start position of **x***ₖ* to obtain a time-domain OFDM signal x̃*ₖ* = [*xₖ*[*N - G*]*, ···, xₖ*[*N -* 1], *xₖ* [0], *xₖ* [1], *···, xₖ*[*N -* 1]]^{T}.

At a receiving end, the OFDM signal is demodulated through inverse processing. It is assumed that synchronization between time and frequency can be obtained and a CP length is sufficient. After a CP removal operation (that is, the first G sampling values in the received signal are removed), a data block that includes N sampling values and that has no ISI is obtained, and the data block is also equivalent to circular convolution of the OFDM symbol **x***ₖ* and a channel impulse response. Time-domain circular convolution can be converted into frequency-domain point multiplication through FFT, and channel equalization can be further completed with low complexity through frequency-domain single-tap equalization.

### (3) DFT-s-OFDM

As shown in FIG. 1, discrete Fourier transform-spread-orthogonal frequency division multiplexing (Discrete Fourier Transform-spread-OFDM, DFT-s-OFDM) defines a data block **s***ₖ* transmitted in time domain. Before an OFDM processing process, additional DFT (discrete Fourier transform) processing is performed, that is, an M-point DFT operation is performed on each data block **s***ₖ* including M pieces of data. Through this operation, a DFT-s-OFDM signal has a characteristic of a single-carrier signal, and has a PAPR far lower than that of a multicarrier signal like an OFDM signal. Therefore, with a same power amplifier, DFT-s-OFDM may provide a higher output power and higher power amplifier efficiency, thereby improving coverage and reducing energy consumption. Advantages of DFT-s-OFDM in coverage and power consumption are particularly evident on a terminal device side. Therefore, in existing versions of LTE and NR, DFT-s-OFDM is applied to uplink transmission.

**s*ₖ*** may include a modulation symbol and/or a redundant signal sampling point. The modulation symbol may be a modulation symbol obtained by modulating a (encoded) bit stream. A modulation scheme may include pulse amplitude modulation (pulse amplitude modulation, PAM), phase shift keying (phase shift keying, PSK), quadrature amplitude modulation (quadrature amplitude modulation, QAM), offset quadrature amplitude modulation (offset quadrature amplitude modulation, OQAM), amplitude phase shift keying (amplitude phase shift keying, APSK), and the like.

The redundant signal sampling point may include a phase tracking reference signal (phase tracking reference signal, PTRS) sampling point, a unique word (unique word), zero, and the like.

### (4) Single-carrier (single-carrier, SC) modulation

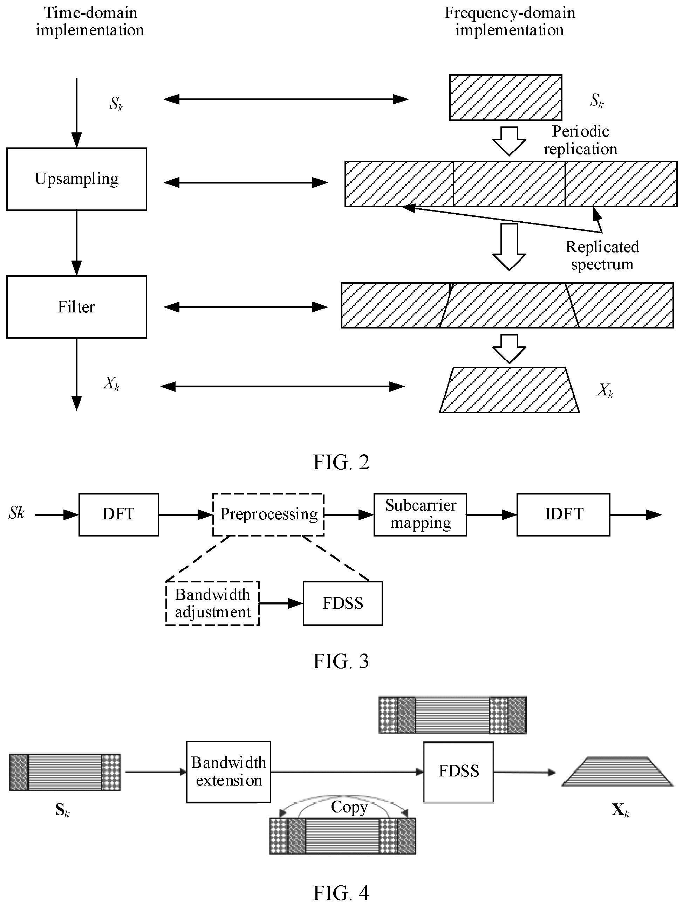

FIG. 2 is a diagram of single-carrier modulation. As shown in FIG. 2, shaping filtering is performed on **s*ₖ*** to generate a signal **x*ₖ*,** including two processes: upsampling and filtering. Filtering may be implemented as convolution of an upsampling signal and a shaping pulse (or a filter coefficient). The convolution includes linear convolution and circular convolution.

Time-domain sampling is equivalent to periodically replicating a spectrum of a data sequence in frequency domain, where a periodicity is a width of the spectrum of the data sequence. In addition, time-domain circular convolution corresponds to frequency-domain point multiplication. On the right side of FIG. 2, the two processes of upsampling (upsampling) and filtering are explained from a perspective of frequency domain. A rectangular grid with slashes is the spectrum of the data sequence. A trapezoid in FIG. 2 represents a frequency-domain response of a shaped pulse or a filter. In addition, in FIG. 2, it is assumed that a bandwidth of the filter is greater than the width of the spectrum of the data sequence.

Single-carrier modulation with the time-domain circular convolution may also be equivalently implemented by using a frequency-domain processing method. An implementation may be understood as DFT-s-OFDM modulation including frequency-domain processing. FIG. 3 is a diagram of DFT-s-OFDM modulation including frequency-domain preprocessing. As shown in FIG. 3, first, a data sequence is converted to frequency domain through M-point DFT to obtain a frequency-domain signal, for example, **S*ₖ*** is obtained based on **s*ₖ*.** Then, a frequency-domain signal 1 is processed in frequency domain, including frequency-domain point multiplication (corresponding to filtering based on time-domain circular convolution), to obtain a frequency-domain signal 2. Frequency-domain point multiplication may also be referred to as windowing or frequency-domain spectrum shaping (frequency-domain pulse shaping, FDSS) processing. Finally, the frequency-domain signal 2 is converted to time domain through subcarrier mapping and N-point IDFT, for example, **x*ₖ*** is obtained based on **X*ₖ*.** If the bandwidth of the filter is not equal to a bandwidth of the frequency-domain signal 1, or a quantity of subcarriers corresponding to the bandwidth of the filter (it should be understood that the quantity of subcarriers multiplied by a subcarrier spacing is equal to the bandwidth) is not equal to a quantity (that is, M) of pieces of data in the frequency-domain signal 1, bandwidth adjustment needs to be performed on the frequency-domain signal 1 before frequency-domain point multiplication. An adjusted bandwidth is consistent with the bandwidth of the filter.

A corresponding frequency-domain implementation on the right side of FIG. 2 is equivalent to bandwidth extension and FDSS shown in FIG. 4. A bandwidth extension manner shown in FIG. 4 is: copying a signal in a tail part of **S*ₖ*** to the front of **S*ₖ*,** and copying a signal in a head part of **S*ₖ*** to the rear of **S*ₖ*.** A signal output by a bandwidth adjustment module is used as an input of an FDSS module. An output of the FDSS module is equal to the input point multiplied by an FDSS coefficient. For example, a signal **S̃*ₖ*** is obtained by performing bandwidth extension, an *i*^{th} value of the signal is S̃*ₖ*[*i*], a signal **Ṡ*ₖ*** is output through FDSS, and an i^{th} value of the signal is *Ṡₖ* [*i*]. A relationship between *S̃ₖ*[*i*] and *Ṡₖ* [*i*] is as follows: ${\dot{S}}_{k} \left[i\right] = c \left[i\right] ⋅ {{S}^{˜}}_{k} \left[i\right]$ (1) where *c*[*i*] is an *i*^{th} FDSS coefficient.

It can be learned, by comparing FIG. 1 and FIG. 3, that the DFT-s-OFDM modulation shown in FIG. 1 is a special case of the DFT-s-OFDM modulation shown in FIG. 3, that is, a case in which the bandwidth of the filter is equal to the bandwidth of the frequency-domain signal 1 and the FDSS coefficient is 1 (namely, a frequency-domain response of the filter is a rectangular window with an amplitude of 1).

### (5) NR bit mapping

Section 5.1 in the NR protocol 38.211 defines seven modulation mappers, including $\frac{π}{2} - BPSK$, QSPK, 16QAM, 64QAM, and the like. QSPK may also be referred to as 4QAM. Using a QPSK modulation mapper as an example, the QPSK modulation mapper maps two consecutive bits into one QPSK symbol. The mapping is specifically as follows: $d \left(i\right) = \frac{1}{\sqrt{2}} \left[\left(1-2b\left(2i\right)\right)+j\left(1-2b\left(2i+1\right)\right)\right]$
where *b*(2*i*) and *b*(2*i* + 1) respectively represents a 2*i*^{th} bit and a 2*i* + 1^{th} bit, *d*(*i*) represents an *i*^{th} QPSK symbol, and *j*² = 1. Using a 16QAM modulation mapper as an example, the 16QAM modulation mapper maps four consecutive bits into one 16QAM symbol. The mapping is specifically as follows: $d \left(i\right) = \frac{1}{\sqrt{10}} \left\{\left(1-2b\left(4i\right)\right)\left[2-\left(1-2b\left(4i+2\right)\right)\right]+j\left(1-2b\left(4i+1\right)\right)\left[2-\left(1-2b\left(4i+3\right)\right)\right]\right\}$
where *b*(4*i*)*, b*(4*i* + 1), *b*(4*i +* 2), and *b*(4*i* + 3) respectively represents a 4*i*^{th} bit, a 4*i* + 1^{th} bit, a 4*i* + 2^{th} bit, and a 4*i* + 3^{th} bit, and *d*(*i*) represents an *i*^{th} 16QAM symbol.

### (6) Offset QAM (OQAM)

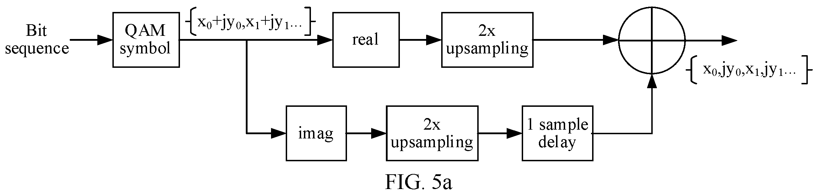

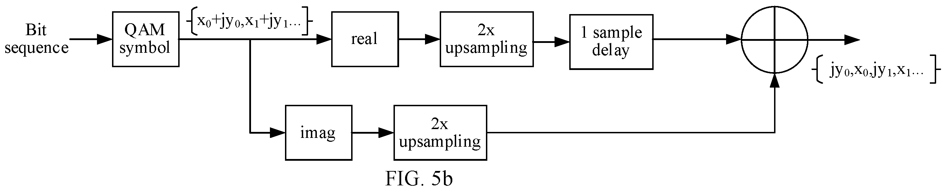

FIG. 5a and FIG. 5b are diagrams of OQAM bit mapping, which may be understood as splitting, based on QAM bit mapping, complex QAM symbols into a sequence in which pure real numbers and pure imaginary numbers alternately appear. For example, through QAM bit mapping, a sequence {*z*₀*, z*₁*, z*₂} including three complex symbols is generated, where *z*₀ = *x*₀ + *jy*₀*, z*₁ *= x*₁ *+ jy*₁*,* and *z*₂ = *x*₂ + *jy*₂, and *x*₀*, x*₁*, x*₂*, y*₀*, y*₁, and *y*₂ are all real numbers. Through offset QAM bit mapping, a sequence including six symbols is generated: {*x*₀*,jy*₀*, x*₁*,jy*₁*, x*₂*,jy*₂} or {*jy*₀*, x*₀*, jy*₁*, x*₁*,jy*₂*, x*₂}*.*

In FIG. 5a and FIG. 5b, the real module outputs a real part of a complex symbol sequence {*x*₀ *+ jy*₀*, x*₁ *+ jy*₁*, x*₂ *+ jy*₂*, ...* } *,* that is, outputs a sequence {*x*₀*,x*₁*, x₂,* .... }, and the imag module outputs an imaginary part of the complex symbol sequence {*x*₀ + *jy*₀*, x*₁ *+ jy*₁*, x*₂ *+ jy*₂*,* ... }, that is, {*jy*₀, *jy*₁*, jy*₂*,* ...}*.* If a sequence {*x*₀*, x*₁*, x*₂*, ..., x*_{*M-*1}} with a length of M is input to the 2x upsampling module, a sequence {*x*₀*,* 0, *x*₁*,* 0*, x*₂*,* 0*, ..., x*_{*M*-1}*, 0}* with a length of 2M is output. If a sequence {*jy*₀, jy₁,*jy*₂, ...,*jy*_{M-1}} with a length of M is input to the 2x upsampling module, a sequence {*jy*₀*,* 0*, jy*₁*,* 0*, jy*₂*,* 0, *... , jy*_{*M-*1}*,* 0} with a length of 2M is output. If the sequence {x₀, 0, *x*₁, 0, *x*₂*,* 0, ..., *x*_{*M-*1}*,* 0} with the length of 2M is input to the 1 sample delay (1 sample delay) module, a sequence {0, *x*₀*,* 0, *x*₁, 0, *x*₂*,* 0, *..., x*_{*M-*1}} with a length of 2M is output. If the sequence {*jy*₀, 0*,jy*₁*,* 0*, jy*₂*,* 0*,...,jy*_{*M*-1}*,* 0} with the length of 2M is input to the 1 sample delay module, a sequence {0, *jy*₀*,* 0, *jy*₁, 0, *jy*₂, 0, ... *jy*_{M-1}} with a length of 2M is output. {*x*₀*,jy*₀*, x*₁, *jy*₁, *..., x*_{*M-*1}*,jy*_{*M-*1}} is generated based on {*x*₀*,* 0, *x*₁, 0, *x*₂*,* 0, *..., x*_{*M-*1}*,* 0} and {0, *jy*₀*,* 0*,jy*₁*,* 0*,jy*₂*,* 0*, ... ,jy*_{*M-*1}}*.*

{*jy*₀*, x*₀*, jy*₁*, x*₁*, ... ,jy*_{*M-*1}*, x*_{*M-*1}} is generated based on {0, *x*₀*,* 0, *x*₁, 0, *x*₂*,* 0, ..., *x*_{*M-*1}} and {*jy*₀*,* 0, *jy*₁*,* 0,*jy*₂, 0, *... ,jy*_{*M-*1}, 0}*.*

It may be learned that $\frac{π}{2} - BPSK$ modulation defined in NR may be considered as offset 4QAM or offset QPSK modulation with phase rotation. A phase rotation amount is $\frac{π}{4}$.

The following points out that a frequency-domain signal corresponding to an OQAM symbol sequence has redundancy. It is assumed that a length of the OQAM symbol sequence is M (it is assumed that M can be exactly divided by 4), and corresponding frequency-domain signals may be obtained by performing M-point DFT on the symbol sequence, which are denoted as y(k), k = 0,1,···, M - 1.

y(k) has the following characteristics: $y \left(\frac{M}{4}-q\right) = y * \left(\frac{M}{4}+q\right) , q = 1 , ⋯ , \frac{M}{4}$ (2) $y \left(\frac{3 M}{4}-q\right) = y * \left(\frac{3 M}{4}+q\right) , q = 1 , ⋯ , \frac{M}{4} - 1$ (3)

A superscript _{*} represents a complex conjugation operation. Therefore, there are $\frac{M}{2} - 1$ redundant signals in *y*(*k*)*, k =* 0,1,··· *,M* - 1. After these redundant signals are removed, *y*(*k*)*, k =* 0,1,··· *,M -* 1 can still be restored by using remaining $\frac{M}{2} + 1$ signals in combination with the foregoing relationship.

If frequency shift corresponding to a half subcarrier is performed on the OQAM symbol sequence before DFT is performed, that is, $\dot{d} \left(i\right) = d \left(i\right) {e}^{- jπi / M} , i = 0 , 1 , ⋯ , M - 1$ (4)

Then, *M*-point DFT is performed on {*ḋ*(*i*)} to obtain frequency-domain signals, which are denoted as *y*(*k*), *k* = 0,1, *··· , M -* 1*.*

y(k) has the following characteristics: $\dot{y} \left(k\right) \left(\frac{M}{4}-1-q\right) = \dot{y} * \left(\frac{M}{4}+q\right) , q = 0 , ⋯ , \frac{M}{4} - 1$ (5) $\dot{y} \left(k\right) \left(\frac{3 M}{4}-1-q\right) = \dot{y} * \left(\frac{3 M}{4}+q\right) , q = 0 , ⋯ , \frac{M}{4} - 1$ (6)

Therefore, there are $\frac{M}{2}$ redundant signals in *y*(*k*), *k* = 0,1, ··· *, M -* 1. After these redundant signals are removed, *y*(*k*), *k* = 0,1, · · · , *M -* 1 can still be restored by using remaining $\frac{M}{2}$ signals in combination with the foregoing relationship.

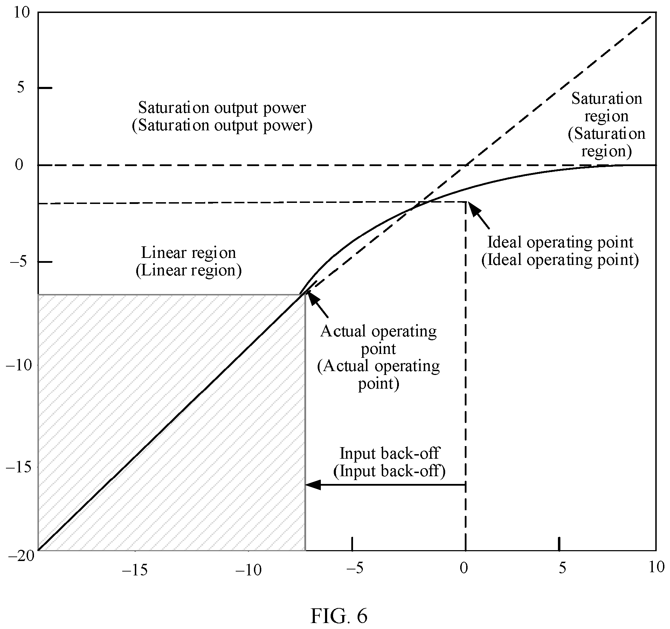

Before a signal is transmitted, a power of the signal is increased by a power amplifier (power amplifier, PA). PA efficiency refers to a ratio of an output power to an input power of the PA. FIG. 6 is a diagram of a relationship between an input power and an output power of a solid-state power amplifier. When the output power of the PA reaches the maximum, the efficiency of the PA is the highest. However, in this case, the signal enters a non-linear operating region of the PA (in this region, the output power no longer increases linearly with the input power), resulting in distortion of an output signal and spectrum spread or spectrum regeneration. Spectrum regeneration causes mutual interference between subcarriers, which increases a bit error rate. In addition, spectrum regeneration also increases interference to an adjacent channel user.

A peak to average power ratio (peak to average power ratio, PAPR) reflects a fluctuation degree of a signal envelope or amplitude. A lower PAPR indicates a smaller fluctuation degree of the signal envelope or amplitude. Ahigher PAPR indicates a larger fluctuation degree of the signal envelope or amplitude. When the PAPR is excessively high, a signal output by the PA is distorted. In 5G NR, an OFDM modulation waveform is used in both the uplink and the downlink. In addition, to improve coverage and reduce energy consumption, a DFT-s-OFDM waveform is also introduced in the uplink. A PAPR of the DFT-s-OFDM waveform is lower than that of the OFDM waveform. In the future, a higher frequency band is used for communication, and the higher frequency band has a resource advantage of an ultra-large bandwidth, but also faces some challenges, including a limited sampling bandwidth, high phase noise, a large path loss, and a decrease in PA efficiency. For example, the output power of the PA decreases by 20 dB each time a frequency increases by 10 times. Reducing the PAPR is a path for reducing a spectrum regeneration degree and maintaining PA efficiency. Therefore, a waveform with a PAPR lower than that of the 5G DFT-s-OFDM waveform may be used in future communication.

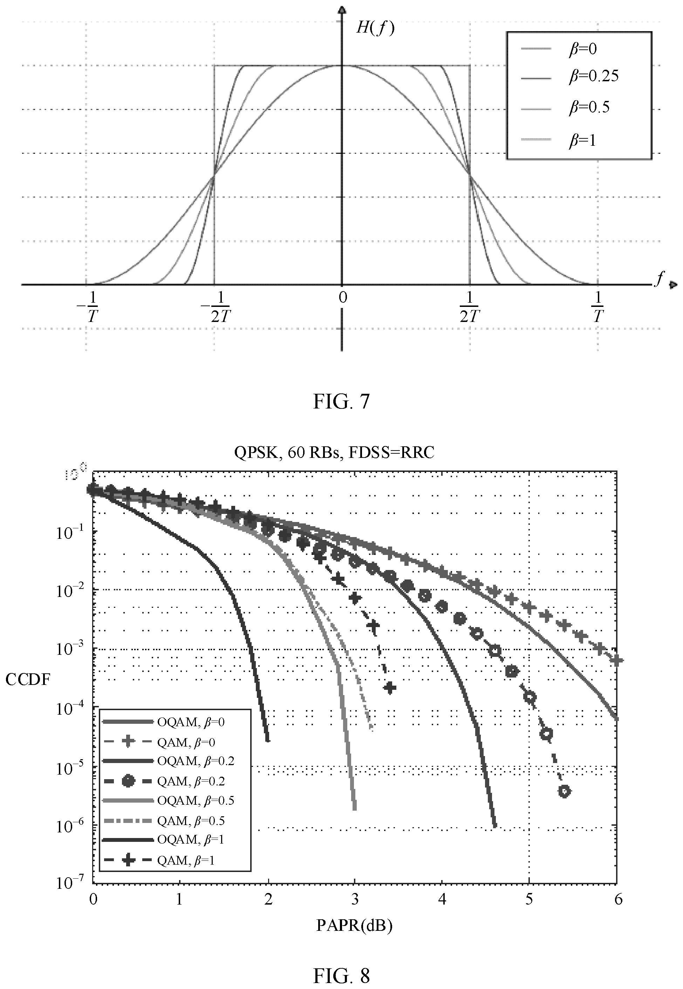

Roll-off is the steepness of a frequency response function with frequency. FIG. 7 shows frequency responses under different roll-off. As shown in FIG. 7, a frequency response whose shape is a rectangle is the steepest. In practice, it is difficult to implement a filter whose frequency response is in a shape of a rectangle window. The roll-off can reduce the difficulty in implementing the filter, but increase a bandwidth.

A roll-off factor is defined as follows: $β = \frac{Increased bandwidth}{Non - roll - off bandwidth} = \frac{Extended bandwidth}{Non - roll - off bandwidth} - 1$

The non-roll-off bandwidth corresponds to a bandwidth when β=0. It can be further learned from FIG. 7 that when β=1, the bandwidth is doubled, and when β=0.5, the bandwidth is increased by 50%.

β is defined based on the non-roll-off bandwidth as a reference. Alternatively, spectrum/bandwidth extension may be described based on an extended bandwidth as a reference. For example, a spectrum/bandwidth extension factor shown in the following formula is defined as: $Spectrum / Bandwidth extension factor = \frac{Increased bandwidth}{Extended bandwidth} = \frac{β \times Non - roll - off bandwidth}{\left(1+β\right) \times Non - roll - off bandwidth} = \frac{β}{\left(1+β\right)}$

When β=1, the spectrum/bandwidth extension factor is 0.5; or when β=0.5, the spectrum/bandwidth extension factor is 1/3.

APAPR of a QAM DFT-s-OFDM signal is reduced through bandwidth extension and FDSS. QAM DFT-s-OFDM means that an input of a DFT module in DFT-s-OFDM modulation is a QAM symbol sequence. FIG. 8 is a diagram of PAPRs of QPSK DFT-s-OFDM and offset QPSK DFT-s-OFDM signals. As shown in FIG. 8, a QAM DFT-s-OFDM PAPR may be reduced through bandwidth extension and FDSS. An input of DFT-s-OFDM is a QPSK symbol sequence. A signal obtained through bandwidth extension occupies 720 subcarriers, and corresponds to 60 physical resource blocks (resource blocks, RBs). FDSS is a root-raised cosine (root-raised cosine, RRC) function and has 720 coefficients. The RRC function is a Nyquist filter. A roll-off factor of the RRC is the same as a roll-off factor corresponding to a bandwidth added to a frequency-domain signal. Using a curve of "QAM, β = 0.2" in the figure as an example, a DFT input includes 600 (equal to 720 divided by 1.2, and 1.2 is equal to 1 + β) QPSK symbols, and a DFT output includes a frequency-domain signal including 600 pieces of data. A frequency-domain signal including 720 pieces of data is obtained according to the bandwidth extension manner shown in FIG. 4. A roll-off factor corresponding to a bandwidth added to the frequency-domain signal is equal to 120/600=0.2. It can be learned that a PAPR can be reduced through bandwidth extension and FDSS.

Further reducing the DFT-s-OFDM PAPR through OQAM means that an input of the DFT module in DFT-s-OFDM modulation is an OQAM symbol sequence. With reference to the analysis in the term (6), when a same quantity of bits are carried, a length of an OQAM sequence is twice a length of a QAM symbol sequence. Theoretically, a quantity of resource elements (resource elements, REs) required for transmitting the OQAM sequence is twice a quantity of REs required for transmitting the QAM symbol sequence. However, a frequency-domain signal corresponding to the OQAM sequence still has redundancy. Frequency-domain redundancy can be removed without compromising demodulation performance. In this application, it is assumed that preprocessing shown in Formula (4) is performed on the OQAM symbol sequence, to implement redundancy compression to a maximum extent. In addition, it is assumed that a bandwidth required for transmitting the OQAM sequence is equal to a bandwidth required for transmitting the QAM symbol sequence, to align transmission spectral efficiency of the OQAM sequence and the QAM symbol sequence. For example, the length of the QAM symbol sequence is M, and a length of a corresponding frequency-domain signal is M; and the length of the OQAM symbol sequence is 2M, and a length of a corresponding frequency-domain signal is 2M. The bandwidth required for transmitting the OQAM sequence corresponds to M(1 + β) subcarriers. In this case, the length of the frequency-domain signal corresponding to the OQAM symbol sequence needs to be reduced from 2M to M(1 + β) through redundancy removal. Redundancy removal may also be implemented as selecting M(1 + β) pieces of data from a signal whose length is 2M as an input of FDSS. In this application, with reference to the characteristic (5) and the characteristic (6), middle M(1 + β) pieces of data of the signal whose length is 2M are selected as the input of FDSS.

It can be learned from FIG. 8 that, when β is the same, an OQAM signal has a lower PAPR than a QAM signal. The following briefly describes gain sources. Because a single-carrier signal generated through single-carrier modulation may be considered as interpolation of a symbol sequence input to single-carrier modulation, a large fluctuation degree (or fluctuation) of the input symbol sequence in amplitude and/or phase is unfavorable to PAPR performance of the single-carrier signal. For example, with reference to the term (5), for a QPSK symbol, there is only one amplitude for selection, and for 16QAM modulation, there are three amplitudes for selection. Therefore, a 16QAM single-carrier signal has a higher PAPR than a QPSK single-carrier signal. For another example, two adjacent QPSK symbols in a QPSK symbol sequence have a 0-degree, 90-degree, or 180-degree phase jump (also referred to as zero crossing); and two adjacent symbols in an OQAM symbol sequence have only a 90-degree phase jump. A 180-degree phase jump or zero crossing causes an interpolator to generate a zero signal, which increases a signal envelope fluctuation range and consequently deteriorates a PAPR.

With reference to FIG. 6, non-linearity of the PA causes signal distortion, and causes interference to a signal and signals of other users. To avoid or alleviate these problems, during actual application, the most common method is to perform input power back-off (input back-off) or output power back-off (output back-off, OBO) on the PA. A specific value of the OBO is generally related to an error vector magnitude (error vector magnitude, EVM) and radio frequency transmitter output metrics. A unit of the OBO is dBm, and the EVM is related to a modulation order. As shown in Table 1, it can be learned that low-order modulation has a higher requirement on an EVM value, and can tolerate a larger error.

**Table 1 <38.104 - Table 6.5.2.2-1: EVM requirements for BS type 1-C and BS type 1-H carrier>**

| Modulation scheme for PDSCH | Required EVM |
|---|---|
| QPSK | 17.5% |
| 16QAM | 12.5% |
| 64QAM | 8% |
| 256QAM | 3.5% |

The radio frequency transmitter output metrics include an occupied bandwidth (occupied bandwidth), an adjacent channel leakage ratio (Adjacent Channel Leakage Ratio, ACLR), a spectrum emission mask (spectrum emission mask, SEM), and in-band emission (in-band emission, IBE).

It is assumed that a terminal device generates a signal and sends the signal to a network device. The following Table 2 and Table 3 respectively collect statistics on minimum OBO values of QPSK DFT-s-OFDM and offset QPSK DFT-s-OFDM that meet five metrics (EVM, ACLR, IBE, OBW, and SEM) in broadband (corresponding to a transmission bandwidth (transmission bandwidth) of 60 RBs) and narrowband (corresponding to a transmission bandwidth of 6 RBs).

**Table 2 OBO values of QPSK DFT-s-OFDM and offset QPSK DFT-s-OFDM in broadband**

| FDSS | Scheme | Roll-off factor | OBO for EVM | OBO for ACLR | OBO for IBE | OBO for OBW | OBO For SEM (20 antennas) | Integrated OBO | OBO gain |
|---|---|---|---|---|---|---|---|---|---|
| Rectangular window | QAM | 0 | 0.73 | 0 | 1.44 | 3.72 | 3.4 | 3.72 | -0.08 |
| | OQAM | | 0.97 | 0 | 2.13 | 3.80 | 3.63 | 3.8 | |
| RRC | QAM | 0.2 | 0 | 0 | 1.06 | 2.76 | 2.75 | 2.76 | -0.4 |
| | OQAM | | 0.1 | 0 | 2.11 | 2.37 | 3.15 | 3.15 | |
| | QAM | 0.5 | 0 | 0 | 0 | 2.40 | 2.96 | 2.96 | 1.42 |
| | OQAM | | 0 | 0 | 1.33 | 0 | 1.54 | 1.54 | |
| | QAM | 1 | 0 | 0 | 0 | 3.03 | 4.08 | 4.08 | 4.07 |
| | OQAM | | 0 | 0 | 0 | 0 | 0.01 | 0.01 | |
| [0.335 1 0.335] | QAM | 0.2 | 1.29 | 0 | 2.06 | 1.67 | 2.2 | 2.2 | -0.43 |
| | OQAM | | 2.30 | 0 | 2.63 | 1.14 | 2.48 | 2.63 | |
| | QAM | 0.5 | 0 | 0 | 0 | 1.57 | 2.19 | 2.19 | 0.94 |
| | OQAM | | 0 | 0 | 1.25 | 0 | 0.27 | 1.25 | |
| | QAM | 1 | 0 | 0 | 0 | 2.76 | 3.93 | 3.93 | 3.92 |
| | OQAM | | 0 | 0 | 0 | 0 | 0.01 | 0.01 | |
| Truncated RRC | QAM | 0.2 | 0 | 0 | 0.91 | 2.90 | 2.54 | 2.9 | -0.2 |
| | OQAM | | 0 | 0 | 2.08 | 2.46 | 3.1 | 3.1 | |
| | QAM | 0.5 | 0 | 0 | 0 | 3.34 | 3.41 | 3.41 | 1.67 |
| | OQAM | | 0 | 0 | 1.5 | 0.52 | 1.74 | 1.74 | |
| | QAM | 1 | 0 | 0 | 0 | 4.14 | 4.54 | 4.54 | 4.53 |
| | OQAM | | 0 | 0 | 0 | 0 | 0.01 | 0.01 | |

As shown in Table 2, a subcarrier spacing is 960 kHz, a channel bandwidth (channel bandwidth) is 800 MHz, and a frequency range is FR2-2. The FDSS is RRC, truncated RRC (truncated RRC), or a filter whose time-domain response is [0.335 1 0.335]. It should be understood that when the roll-off factor is 0, the RRC or the truncated RRC is degraded to a rectangular window. In addition, a power amplifier oriented to IEEE 802.11 ad/ay (60 GHz) and based on a complementary metal oxide semiconductor (Complementary Metal Oxide Semiconductor, CMOS) process is considered. A quantity of antennas is 20. For example, a 4th column in Table 2 is OBO for EVM, that is, a minimum OBO value required for meeting an EVM requirement (17.5%, which may be observed from Table 1). A 6th column in Table 2 is OBO for IBE, that is, a minimum OBO value required for meeting an IBE requirement.

**Table 3 OBO values of QPSK DFT-s-OFDM and offset QPSK DFT-s-OFDM in narrowband**

| FDSS | Scheme | Roll-off factor | OBO for EVM | OBO for ACLR | OBO for IBE | OBO for OBW | OBO for SEM (20 antennas) | Integrated OBO | OBO gain |
|---|---|---|---|---|---|---|---|---|---|
| Rectangular window | QAM | 0 | 0.45 | 0 | 1.06 | 0 | 4.77 | 4.77 | 0.5 |
| | OQAM | | 0.67 | 0 | 1.66 | 0 | 4.26 | 4.26 | |
| RRC | QAM | 0.2 | 0 | 0 | 0.61 | 0 | 3.05 | 3.05 | 1 |
| | OQAM | | 0 | 0 | 1.34 | 0 | 2.06 | 2.06 | |
| | QAM | 0.5 | 0 | 0 | 0 | 0 | 2.29 | 2.29 | 1.8 |
| | OQAM | | 0 | 0 | 0.15 | 0 | 0.42 | 0.42 | |
| | QAM | 1 | 0 | 0 | 0 | 0 | 2.88 | 2.88 | 2.8 |
| | OQAM | | 0 | 0 | 0 | 0 | 0.01 | 0.01 | |
| [0.335 1 0.335] | QAM | 0.2 | 1.23 | 0 | 1.49 | 0 | 2.73 | 2.73 | 0.5 |
| | OQAM | | 2.23 | 0 | 1.64 | 0 | 0.85 | 2.23 | |
| | QAM | 0.5 | 0 | 0 | 0 | 0 | 1.71 | 1.71 | 1.7 |
| | OQAM | | 0 | 0 | 0 | 0 | 0.01 | 0.01 | |
| | QAM | 1 | 0 | 0 | 0 | 0 | 2.63 | 2.63 | 2.6 |
| | OQAM | | 0 | 0 | 0 | 0 | 0.01 | 0.01 | |
| Truncated RRC | QAM | 0.2 | 0 | 0 | 0.51 | 0 | 3.84 | 3.84 | 1.4 |
| | OQAM | | 0 | 0 | 1.34 | 0 | 2.41 | 2.41 | |
| | QAM | 0.5 | 0 | 0 | 0 | 0 | 2.61 | 2.61 | 1.8 |
| | OQAM | | 0 | 0 | 0.31 | 0 | 0.83 | 0.83 | |
| | QAM | 1 | 0 | 0 | 0.61 | 0 | 3.47 | 3.47 | 3.4 |
| | OQAM | | 0 | 0 | 0 | 0 | 0.01 | 0.01 | |

The integrated OBO=max(OBE for EVM, OBO for ACLR, OBO for IBE, OBO for OBW, OBO for SEM), and max represents an operation of obtaining a maximum value. An integrated OBO value is as small as possible, and the OBO gain is defined as integrated OBO of QAM minus integrated OBO of OQAM.

The following Table 4 and Table 5 respectively collect statistics on minimum OBO values of 16QAM DFT-s-OFDM and offset 16QAM DFT-s-OFDM that meet five metrics (EVM, ACLR, IBE, OBW, and SEM) in narrowband (corresponding to a transmission bandwidth (transmission bandwidth) of 6 RBs) and broadband (corresponding to a transmission bandwidth of 60 RBs).

**Table 4 OBO values of 16QAM DFT-s-OFDM and offset 16QAM DFT-s-OFDM in broadband**

| FDSS | Scheme | Roll-off factor | OBO for EVM | OBO for ACLR | OBO for IBE | OBO for OBW | OBO for SEM (20 antennas) | Integrated OBO | OBO gain |
|---|---|---|---|---|---|---|---|---|---|
| Rectangular window | QAM | 0 | 4.78 | 0 | 4.08 | 4.50 | 3.9 | 4.78 | 0 |
| | OQAM | | 4.81 | 0 | 4.16 | 4.52 | 3.94 | 4.81 | |
| RRC | QAM | 0.2 | 4.31 | 0 | 3.86 | 3.61 | 3.57 | 4.31 | 0.16 |
| | OQAM | | 4.15 | 0 | 4.07 | 3.47 | 3.64 | 4.15 | |
| | QAM | 0.5 | 4.85 | 0 | 3.09 | 2.98 | 3.15 | 4.85 | 0.46 |
| | OQAM | | 4.39 | 0 | 3.42 | 2.19 | 2.92 | 4.39 | |
| [0.335 1 0.335] | QAM | 0.2 | 7.32 | 0 | 3.64 | 3.39 | 2.62 | 7.32 | 0 |
| | OQAM | | 7.26 | 0 | 3.73 | 0.97 | 2.65 | 7.26 | |
| | QAM | 0.5 | 6.63 | 0 | 2.52 | 1.80 | 2.61 | 6.63 | 0.42 |
| | OQAM | | 6.21 | 0 | 3.0 | 1.74 | 2.32 | 6.21 | |
| Truncated RRC | QAM | 0.2 | 4.22 | 0 | 3.66 | 2.0 | 3.57 | 4.22 | 0.22 |
| | OQAM | | 4.0 | 0 | 3.96 | 1.42 | 3.68 | 4.0 | |
| | QAM | 0.5 | 4.93 | 0 | 3.0 | 3.12 | 3.6 | 4.93 | 0.82 |
| | OQAM | | 4.11 | 0 | 3.31 | 0.67 | 3.01 | 4.11 | |

**Table 5 OBO values of 16QAM DFT-s-OFDM and offset 16QAM DFT-s-OFDM in narrowband**

| FDSS | Scheme | Roll-off factor | OBO for EVM | OBO for ACLR | OBO for IBE | OBO for OBW | OBO for SEM (20 antennas) | Integrated OBO | OBO gain |
|---|---|---|---|---|---|---|---|---|---|
| Rectangular window | QAM | 0 | 4.67 | 0 | 3.74 | 0 | 4.81 | 4.81 | 0.1 |
| | OQAM | | 4.69 | 0 | 3.85 | 0 | 4.73 | 4.73 | |
| RRC | QAM | 0.2 | 4.31 | 0 | 3.44 | 0 | 3.24 | 4.31 | 0.15 |
| | OQAM | | 4.16 | 0 | 3.6 | 0 | 2.93 | 4.16 | |
| | QAM | 0.5 | 4.94 | 0 | 2.66 | 0 | 2.64 | 4.94 | 0.5 |
| | OQAM | | 4.45 | 0 | 2.86 | 0 | 2.01 | 4.45 | |
| [0.335 1 0.335] | QAM | 0.2 | 7.26 | 0 | 2.78 | 0 | 2.13 | 7.26 | 0 |
| | OQAM | | 7.26 | 0 | 2.85 | 0 | 1.89 | 7.26 | |
| | QAM | 0.5 | 6.42 | 0 | 2.03 | 0 | 2.07 | 6.42 | 0.4 |
| | OQAM | | 6.04 | 0 | 2.16 | 0 | 1.48 | 6.04 | |
| Truncated RRC | QAM | 0.2 | 4.25 | 0 | 3.36 | 0 | 3.74 | 4.25 | 0.2 |
| | OQAM | | 4.03 | 0 | 3.57 | 0 | 3.14 | 4.03 | |
| | QAM | 0.5 | 4.97 | 0 | 2.68 | 0 | 3.01 | 4.97 | 0.8 |
| | OQAM | | 4.18 | 0 | 2.74 | 0 | 2.3 | 4.18 | |

The following Table 6 and Table 7 respectively collect statistics on minimum OBO values of 64QAM DFT-s-OFDM and offset 64QAM DFT-s-OFDM that meet five metrics (EVM, ACLR, IBE, OBW, and SEM) in narrowband (corresponding to a transmission bandwidth (transmission bandwidth) of 6 RBs) and broadband (corresponding to a transmission bandwidth of 60 RBs). Other parameters are the same as those in Table 2 and Table 3.

**Table 6 OBO values of 64QAM DFT-s-OFDM and offset 64QAM DFT-s-OFDM in broadband**

| FDSS | Scheme | Roll-off factor | OBO for EVM | OBO for ACLR | OBO for IBE | OBO for OBW | OBO for SEM (20 antennas) | Integrated OBO | OBO gain |
|---|---|---|---|---|---|---|---|---|---|
| Rectangular window | QAM | 0 | 8.14 | 0.2 | 6.86 | 4.60 | 4.02 | 8.14 | 0 |
| | OQAM | | 8.14 | 0.2 | 6.91 | 4.60 | 4.02 | 8.14 | |
| RRC | QAM | 0.2 | 7.43 | 0 | 6.54 | 3.70 | 3.69 | 7.43 | 0.16 |
| | OQAM | | 7.27 | 0 | 6.74 | 3.60 | 3.72 | 7.27 | |
| | QAM | 0.5 | 7.7 | 0 | 5.8 | 3.07 | 3.27 | 7.7 | 0.57 |
| | OQAM | | 7.13 | 0 | 6.07 | 2.31 | 3.08 | 7.13 | |
| [0.335 1 0.335] | QAM | 0.2 | 10.03 | 0 | 6.15 | 3.42 | 2.68 | 10.03 | 0 |
| | OQAM | | 10 | 0 | 6.22 | 1.23 | 2.74 | 10 | |
| | QAM | 0.5 | 9.31 | 0 | 5.03 | 1.83 | 2.68 | 9.31 | 0.41 |
| | OQAM | | 8.9 | 0 | 5.45 | 1.78 | 2.34 | 8.9 | |
| Truncated RRC | QAM | 0.2 | 7.44 | 0 | 6.39 | 2.02 | 3.69 | 7.44 | 0.22 |
| | OQAM | | 7.22 | 0 | 6.67 | 1.46 | 3.76 | 7.22 | |
| | QAM | 0.5 | 8.01 | 0 | 5.84 | 3.16 | 3.69 | 8.01 | 0.96 |
| | OQAM | | 7.05 | 0 | 5.99 | 0.98 | 3.16 | 7.05 | |

**Table 7 OBO values of 64QAM DFT-s-OFDM and offset 64QAM DFT-s-OFDM in narrowband**

| FDSS | Scheme | Roll-off factor | OBO for EVM | OBO for ACLR | OBO for IBE | OBO for OBW | OBO for SEM (20 antennas) | Integrated OBO | OBO gain |
|---|---|---|---|---|---|---|---|---|---|
| Rectangular window | QAM | 0 | 7.96 | 0 | 6.55 | 0 | 4.81 | 7.96 | 0 |
| | OQAM | | 7.98 | 0 | 6.55 | 0 | 4.7 | 7.98 | |
| RRC | QAM | 0.2 | 7.36 | 0 | 6.07 | 0 | 3.31 | 7.36 | 0.1 |
| | OQAM | | 7.27 | 0 | 6.27 | 0 | 3.11 | 7.27 | |
| | QAM | 0.5 | 7.77 | 0 | 5.33 | 0 | 2.72 | 7.77 | 0.6 |
| | OQAM | | 7.19 | 0 | 5.39 | 0 | 2.16 | 7.19 | |
| [0.335 1 0.335] | QAM | 0.2 | 10.03 | 0 | 5.2 | 0 | 2.1 | 10.03 | 0 |
| | OQAM | | 9.98 | 0 | 5.3 | 0 | 1.91 | 9.98 | |
| | QAM | 0.5 | 9.1 | 0 | 4.48 | 0 | 2.13 | 9.1 | 0.35 |
| | OQAM | | 8.74 | 0 | 4.5 | 0 | 1.64 | 8.74 | |
| Truncated RRC | QAM | 0.2 | 7.42 | 0 | 6.03 | 0 | 3.7 | 7.42 | 0.2 |
| | OQAM | | 7.22 | 0 | 6.27 | 0 | 3.22 | 7.22 | |
| | QAM | 0.5 | 8.04 | 0 | 5.55 | 0 | 3.06 | 8.04 | 0.95 |
| | OQAM | | 7.1 | 0 | 5.39 | 0 | 2.37 | 7.1 | |

It should be understood that the results in Table 2 to Table 7 are obtained under a given parameter configuration. If a parameter like a PA model or an ACLR requirement (for example, in FR1, a minimum requirement on an ACLR of an uplink signal is 30 dB, and in FR2-2, a minimum requirement on an ACLR is 15 dB) is changed, values in the table change accordingly.

It can be learned from FIG. 8 that, although OQAM has a PAPR advantage over QAM, with reference to Table 2 to Table 7, this advantage may not bring an OBO gain or a gain is not significant in some parameter configurations. Based on the OBO gain, whether to use a QAM waveform or an OQAM waveform can be determined. For example, as shown in Table 2, when the FDSS is a rectangular window filter (the roll-off factor is 0), the integrated OBO of QAM is 3.4, and the integrated OBO of OQAM is 3.63. In this parameter configuration, using the OQAM waveform does not bring an OBO gain. Therefore, even if OQAM has a PAPR advantage over QAM, it can be determined to use the QAM waveform based on the OBO gain.

For another example, as shown in Table 2, when the FDSS is an RRC filter, and the roll-off factor is 0.5, the integrated OBO of QAM is 2.96, and the integrated OBO of OQAM is 1.54. In this parameter configuration, an OBO gain brought by using the OQAM waveform is about 1.42 dB, which is significant. Therefore, it can be determined to use the OQAM waveform.

For another example, as shown in Table 2, when the FDSS is an RRC filter, and the roll-off factor is 1, the integrated OBO of QAM is 4.08, and the integrated OBO of OQAM is 0.01. In this parameter configuration, an OBO gain brought by using the OQAM waveform is large. Therefore, when OQAM has a PAPR advantage over QAM, it can be determined, based on the OBO gain, to use the OQAM waveform.

It should be understood that an OBO gain may be obtained by selecting the OQAM waveform. Because the QAM waveform is used as a waveform for uplink signal transmission in 5GNR, existing signal generation and demodulation manners may continue to be used by selecting the QAM waveform, and a small modification is made to a protocol.

In conclusion, how the network device or the terminal device determines whether to use the QAM waveform or the OQAM waveform for signal transmission is a problem that needs to be paid attention to currently.

In view of this, this application provides a communication method. In the method, a communication device may determine a transmission waveform of a signal based on a threshold of a modulation order and a threshold of a roll-off factor. The roll-off factor may be determined based on a transmission bandwidth and a quantity of symbols carried in the transmission waveform. According to the method provided in this application, a magnitude of an OBO gain may be reflected by using the threshold of the modulation order and the threshold of the roll-off factor. When the OBO gain is greater than a threshold, an OQAM waveform is used for transmission. When there is no OBO gain or the OBO gain is less than a threshold, an existing QAM waveform continues to be used for transmission, and a small modification is made to a protocol.

Before the communication method provided in this application is described below, a communication system to which this application is applicable is first specifically described.

This application may be applied to various communication systems, for example, a 5th generation (5th generation, 5G) system, a new radio (New radio, NR) system, a satellite communication system, or a long term evolution (long term evolution, LTE) system. The present invention may also be applied to a future communication system, for example, a sixth generation mobile communication system. The present invention may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

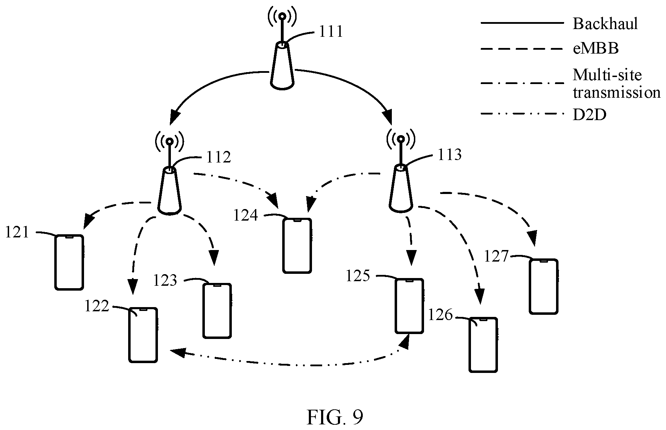

For example, FIG. 9 is a diagram of a communication system according to an embodiment of this application. As shown in FIG. 9, the communication system includes at least one network device, for example, a network device 111, a network device 112, and a network device 113. The communication system may further include at least one terminal device, for example, a terminal device 121, a terminal device 122, a terminal device 123, a terminal device 124, a terminal device 125, a terminal device 126, and a terminal device 127. Communication may be performed between a network device and a terminal device, for example, multi-site transmission shown in the figure. The network device 112 may communicate with the terminal device 121, the terminal device 122, and the terminal device 123, and the network device 113 may communicate with the terminal device 125, the terminal device 126, and the terminal device 127. For another example, in enhanced mobile broadband (enhanced mobile broadband, eMBB) transmission shown in FIG. 9, the network device 112 and the network device 113 may communicate with the terminal device 124. Communication may also be performed between network devices, for example, backhaul shown in FIG. 9. The network device 111 may communicate with the network device 112 and the network device 113. Communication may also be performed between terminal devices, for example, D2D transmission shown in FIG. 9. For example, the terminal device 122 may communicate with the terminal device 125.

It should be understood that FIG. 9 is merely an example for description, and this application is not limited thereto. This application may be applicable to any communication scenario in which a transmit device communicates with a receive device. It should be further understood that a communication device (for example, a transmit device and a receive device) in this application may be a network device, or may be a terminal device. For example, the transmit device mentioned in this application may be a terminal device, and the receive device may be a network device. For another example, the transmit device mentioned in this application may be a network device, and the receive device may be a terminal device. For another example, both the transmit device and the receive device mentioned in this application may be terminal devices. For another example, both the transmit device and the receive device mentioned in this application may be network devices.

The terminal device in the communication system may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may be a device that provides voice/data connectivity for a user, for example, a handheld device or a vehicle-mounted device with a wireless connection function. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device, another processing device connected to a wireless modem, a wearable device, a terminal device in a 5G network, a terminal device in a future evolved public land mobile network (public land mobile network, PLMN), or the like. This is not limited in embodiments of this application. In internet of vehicles communication, a communication terminal mounted on a vehicle is a terminal device, and a road side unit (road side unit, RSU) may also be used as a terminal device. A communication terminal mounted on an uncrewed aerial vehicle may also be considered as a terminal device.

The terminal device may alternatively be a wearable device. The wearable device may also be referred to as a wearable intelligent device, and is a general term of wearable devices that are intelligently designed and developed for daily wear by using a wearable technology, for example, glasses, gloves, watches, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

The terminal device may alternatively be a terminal device in an internet of things (internet of things, IoT) system. The IoT is an important part of future information technology development, and a main technical feature of the IoT is to connect an object to a network by using a communication technology, thereby implementing an intelligent network with human-machine interconnection and thing-thing interconnection.

The network device in the communication system may be a device that can communicate with the terminal device. The network device may also be referred to as an access network device or a radio access network device. For example, the network device may be a base station. The network device may be a radio access network (radio access network, RAN) node (or device) that connects a terminal device to a wireless network. The base station may cover following various names in a broad sense, or may be replaced with the following names, for example, a NodeB (NodeB), an evolved NodeB (evolved NodeB, eNB), a next generation NodeB (next generation NodeB, gNB), a relay station, an access point, a transmission reception point (transmission reception point, TRP), a transmission point (transmission point, TP), a master eNodeB (master eNodeB, MeNB), a secondary eNodeB (secondary eNodeB, SeNB), a multi-standard radio (multi-standard radio, MSR) node, a home base station, a network controller, an access node, a wireless node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks of a same access technology or different access technologies. A specific technology and a specific device form that are used by the network device are not limited in the present invention.

The base station may be fixed or mobile. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

The network device and the terminal device may be deployed on the land, including an indoor or outdoor device, a handheld device, or a vehicle-mounted device; or may be deployed on the water; or may be deployed on an airplane, a balloon, or a satellite in the air. A scenario in which the network device and the terminal device are located is not limited in the present invention.

In some embodiments, the network device 20 and the terminal device 30 may also be referred to as communication apparatuses, and each may be a general-purpose device or a dedicated device. This is not specifically limited in embodiments of this application.

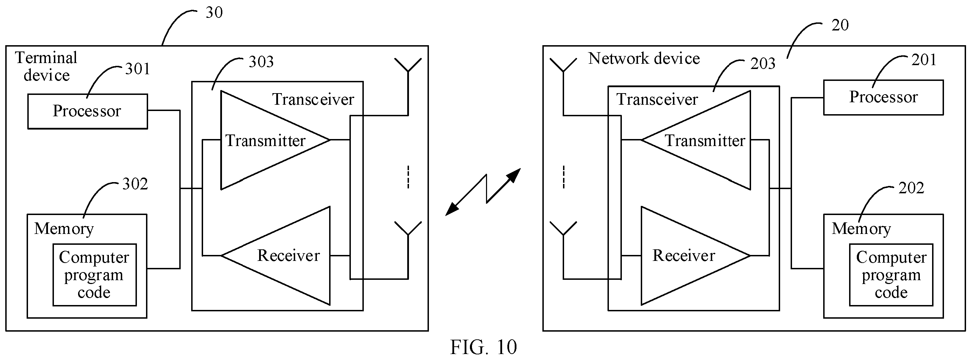

FIG. 10 is a diagram of structures of a network device 20 and a terminal device 30 according to an embodiment of this application.

The terminal device 30 includes at least one processor (an example in which one processor 301 is included is used for description in FIG. 10) and at least one transceiver (an example in which one transceiver 303 is included is used for description in FIG. 10). Further, the terminal device 30 may further include at least one memory (an example in which one memory 302 is included is used for description in FIG. 10), at least one output device (an example in which one output device 304 is included is used for description in FIG. 10), and at least one input device (an example in which one input device 305 is included is used for description in FIG. 10).

The processor 301, the memory 302, and the transceiver 303 are connected through a communication line. The communication line may include a path for transmission of information between the foregoing components.

The processor 301 may be a general-purpose central processing unit (central processing unit, CPU), a microprocessor, an application-specific integrated circuit (application-specific integrated circuit, ASIC), or one or more integrated circuits configured to control program execution of the solutions of this application. During specific implementation, in an embodiment, the processor 301 may alternatively include a plurality of CPUs, and the processor 301 may be a single-core (single-CPU) processor or a multi-core (multi-CPU) processor. The processor herein may refer to one or more devices, circuits, or processing cores configured to process data (for example, computer program instructions).

The memory 302 may be an apparatus having a storage function. For example, the memory may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer, but is not limited thereto. The memory 302 may exist independently, and is connected to the processor 301 through a communication line. The memory 302 may alternatively be integrated with the processor 301.

The memory 302 is configured to store computer-executable instructions for executing the solutions of this application, and the processor 301 controls the execution. Specifically, the processor 301 is configured to execute the computer-executable instructions stored in the memory 302, to implement a method in an embodiment of this application.

Alternatively, in this application, the processor 301 may perform a processing-related function in signal sending and receiving methods provided in this application, and the transceiver 303 is responsible for communicating with another device or a communication network. This is not specifically limited in embodiments of this application.

The computer-executable instructions in this application may also be referred to as application program code or computer program code. This is not specifically limited in embodiments of this application.

The transceiver 303 may be any apparatus like a transceiver, and is configured to communicate with another device or a communication network, for example, the Ethernet, a radio access network (radio access network, RAN), or a wireless local area network (wireless local area network, WLAN). The transceiver 303 includes a transmitter (transmitter, Tx) and a receiver (receiver, Rx).

The output device 304 communicates with the processor 301, and may display information in a plurality of manners. For example, the output device 304 may be a liquid crystal display (liquid crystal display, LCD), a light-emitting diode (light-emitting diode, LED) display device, a cathode ray tube (cathode ray tube, CRT) display device, or a projector (projector).

The input device 305 communicates with the processor 301, and may receive an input of a user in a plurality of manners. For example, the input device 305 may be a mouse, a keyboard, a touchscreen device, or a sensing device.

The network device 20 includes at least one processor (an example in which one processor 201 is included is used for description in FIG. 10) and at least one transceiver (an example in which one transceiver 203 is included is used for description in FIG. 10). Further, the network device 20 may further include at least one memory (an example in which one memory 202 is included is used for description in FIG. 10) and at least one network interface (an example in which one network interface 204 is included is used for description in FIG. 10). The processor 201, the memory 202, the transceiver 203, and the network interface 204 are connected through a communication line. The network interface 204 is configured to connect to a core network device through a link, or connect to a network interface of another network device through a wired or wireless link (not shown in FIG. 10). This is not specifically limited in embodiments of this application. In addition, for related descriptions of the processor 201, the memory 202, and the transceiver 203, refer to the descriptions of the processor 301, the memory 302, and the transceiver 303 in the terminal device 30. Details are not described herein again.

It may be understood that the structures shown in FIG. 10 do not constitute a specific limitation on the terminal device 30 and the network device 20. For example, in some other embodiments of this application, the terminal device 30 and the network device 20 each may include more or fewer components than those shown in the figure, or combine some components, or split some components, or have different component arrangements. The components shown in the figure may be implemented by hardware, software, or a combination of software and hardware.

In a possible application scenario, this application may be applied to a high-frequency communication scenario. According to the communication method provided in this application, OBO of a power amplifier can be reduced, thereby increasing an output signal power of the power amplifier. A larger output power of the power amplifier indicates larger signal coverage. Therefore, a large output power of the power amplifier is conducive to high-frequency communication coverage in the high-frequency communication field.

In another possible application scenario, this application may alternatively be applied to a sensing scenario. According to the communication method provided in this application, OBO of a power amplifier can be reduced, thereby increasing an output signal power of the power amplifier. A larger output power of the power amplifier indicates larger signal coverage. Therefore, a larger output power of the power amplifier is conducive to increasing a power of an echo signal generated by reflection by a long-distance target in the sensing field.

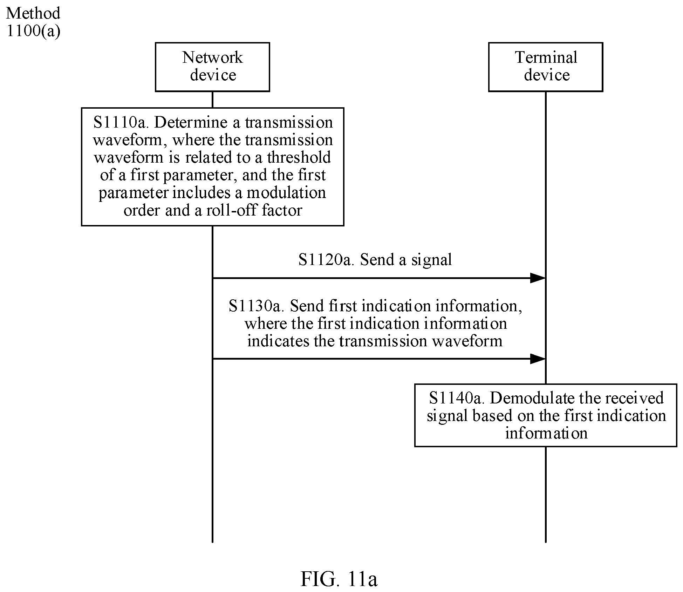

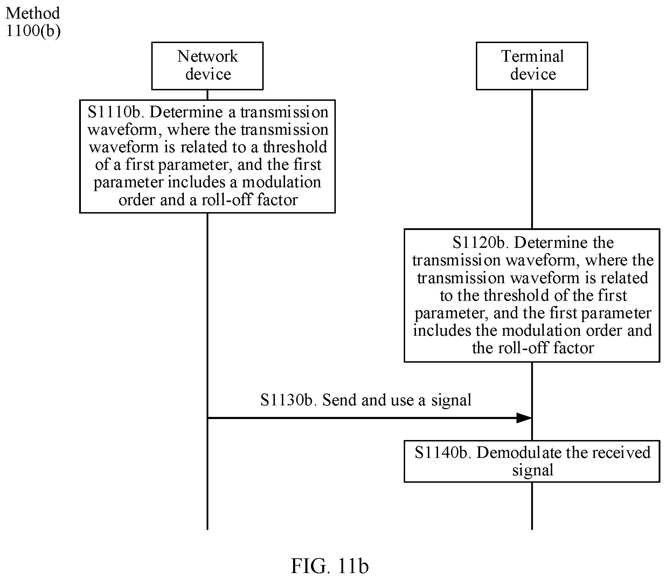

The following describes in detail the communication method provided in this application with reference to FIG. 11a and FIG. 11b. FIG. 11a is a diagram of interaction in a communication method 1100(a) according to an embodiment of this application. The method 1100(a) may be applied to the foregoing scenario, and certainly may be applied to another communication scenario. This is not limited in this embodiment of this application.

It should be understood that, in this embodiment of this application, the method 1100(a) may be performed by a first communication device. Unless otherwise specified, the "first communication device" in this application may be the first communication device (for example, a network device or a terminal device), or may be a component (for example, a processor, a chip, or a chip system) in the first communication device, or may be a logical module or software that can implement all or a part of functions of the first communication device. An execution body of the communication method is not limited in this application.

The following describes the method 1100(a) by using an example in which a terminal device and a network device are used as execution bodies for performing steps in the method 1100(a).

As shown in FIG. 11a, the method 1100(a) includes the following steps.

S1110a. The network device determines a transmission waveform, where the transmission waveform is related to a threshold of a first parameter, and the first parameter includes a modulation order and a roll-off factor.

In this embodiment of this application, the network device may determine, based on a threshold of the modulation order and a threshold of the roll-off factor, whether an input of single-carrier modulation is based on an OQAM symbol sequence or a QAM symbol sequence. The single-carrier modulation may be DFT-s-OFDM modulation. Certainly, the single-carrier modulation may further include another modulation scheme, for example, the implementation shown on the left side of FIG. 2 or single-carrier frequency domain equalization. This is not specifically limited in this embodiment of this application.

In some possible implementations, a single-carrier signal is a DFT-s-OFDM signal. In this embodiment of this application, determining, based on the threshold of the modulation order and the threshold of the roll-off factor, to use an OQAM DFT-s-OFDM waveform and a QAM DFT-s-OFDM waveform is used as an example for specific description.

It can be learned from Table 2 to Table 7 that, when QPSK modulation is used, OBO for SEM is a dominant factor in most cases.

The following describes Table 8, that is, a modulation and coding scheme (modulation and coding scheme, MCS) table used for signal transmission in 5G new radio (new radio, NR).

**Table 8 5G NR MCS table**

| MCS index | Modulation order | Target code | Spectral efficiency |
|---|---|---|---|
| I_{MCS} | Qm | rate R×1024 | |
| 0 | q | 240/q | 0.2344 |
| 1 | q | 314/q | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 466 | 2.7305 |
| 18 | 6 | 517 | 3.0293 |
| 19 | 6 | 567 | 3.3223 |
| 20 | 6 | 616 | 3.6039 |
| 21 | 6 | 666 | 3.9023 |
| 22 | 6 | 719 | 4.2129 |
| 23 | 6 | 772 | 4.5234 |
| 24 | 6 | 822 | 4.8164 |
| 25 | 6 | 873 | 5.1152 |
| 26 | 6 | 910 | 5.3320 |
| 27 | 6 | 948 | 5.5547 |
| 28 | q | Reserved | |
| 29 | 2 | Reserved | |
| 30 | 4 | Reserved | |
| 31 | 6 | Reserved | |

In transmission defined in NR, the network device indicates an MCS index (index) to the terminal device. Corresponding to the foregoing table, the MCS index indicates transmission information used for uplink or downlink transmission. As shown in the table, the MCS Index has 32 values and corresponds to five bits.

The foregoing table is an MCS table defined in a protocol. A 1st column represents the MCS index, and a 2nd column represents the modulation order, that is, a quantity of bits carried in a modulation symbol. For example, when I_MCS is set to 0 and 1, the modulation order is q=1, representing that Pi/2 BPSK transmission is used for transmission. When I_MCS is set to 2 to 9, QPSK constellation transmission with a modulation order of 2 is used for transmission. When I_MCS is set to 10 to 16, 16QAM constellation transmission with a modulation order of 4 is used for transmission. When I_MCS is set to 17 to 27, 64QAM constellation transmission with a modulation order of 6 is used for transmission.

A 3rd column in the table represents the target code rate corresponding to transmission, and a value in the table divided by 1024 is a used code rate of channel coding. For example, when I_MCS is set to 0, a code rate expected to be used is 240/1024=0.234375. When I_MCS is set to 1, a code rate expected to be used is 314/1024=0.306640. In this case, a receiver performs decoding via a corresponding decoder.

A 4th column in the table represents the spectral efficiency (Spectral efficiency, SE) corresponding to transmission. Generally, a value of the spectral efficiency is the code rate in the 3rd column divided by 1024 and multiplied by the modulation order in the 2nd column. For example, when I_MCS is set to 0, the code rate expected to be used is 240/1024×1=0.234375, which is approximately equal to 0.2344.

Therefore, in some embodiments, the network device may determine, based on a first threshold of the modulation order and a value of the modulation order, whether an SEM is a dominant factor in an OBO value. When the value of the modulation order is less than or equal to the first threshold of the modulation order, the assumption that OBO for SEM is basically the dominant factor may be true.

For example, based on Table 8, the first threshold of the modulation order may be set to 2. When the value of the modulation order is less than or equal to 2, a QPSK constellation transmission modulation scheme is used for transmission. With reference to Table 2 to Table 7, when the QPSK modulation scheme is used for transmission, the assumption that OBO for SEM is basically the dominant factor may be true.

Further, it can be learned from Table 2 to Table 7 that, in addition to the modulation scheme, the OBO value is related to a roll-off factor and a transmission bandwidth during receiving a signal by a filter. When the SEM is the dominant factor (based on Table 2 and Table 3), for a broadband transmission case, when the roll-off factor is small, OQAM has no gain or has a smaller gain compared with QAM. For a narrowband transmission case, OQAM always has a gain compared with QAM.

Therefore, the network device may determine a roll-off factor during signal transmission. When a value of the roll-off factor is greater than or equal to a first threshold of the roll-off factor, the network device may use the OQAM DFT-s-OFDM waveform for signal transmission. When the value of the roll-off factor is less than the first threshold of the roll-off factor, the network device may use the QAM DFT-s-OFDM waveform for signal transmission.

In a possible implementation, the network device may determine the roll-off factor based on a transmission bandwidth used when the network device transmits the signal to the terminal device and a quantity of symbols carried in the transmission waveform during signal transmission. For example, if the transmission bandwidth is 60 RBs, corresponding to 720 subcarriers, and the quantity of symbols during signal transmission is 600, the roll-off factor is equal to 720/600-1=0.2.

In some embodiments, the first threshold of the roll-off factor is related to a transmission bandwidth factor.

Whether a signal is transmitted through broadband or narrowband may be determined based on a value of the transmission bandwidth factor and a threshold of the transmission bandwidth factor. A first threshold of the roll-off factor when the signal is transmitted through broadband may be different from a first threshold of the roll-off factor when the signal is transmitted through narrowband.

For example, when the signal is transmitted through broadband, the first threshold of the roll-off factor may be set to 0.4; or when the signal is transmitted through narrowband, the first threshold of the roll-off factor may be set to 0.2.

When the value of the transmission bandwidth factor is greater than or equal to a first threshold of the transmission bandwidth factor, it indicates that the signal is transmitted through broadband. Still refer to Table 2. It is assumed that the first threshold of the transmission bandwidth factor is 0.6, and the value of the transmission bandwidth factor is 0.96, indicating that the network device performs broadband transmission. When the value of the roll-off factor is greater than or equal to 0.4, OQAM has a larger gain compared with QAM. Therefore, when the value of the roll-off factor is greater than or equal to 0.4, the network device may use the OQAM DFT-s-OFDM waveform for signal transmission. When the value of the roll-off factor is less than 0.4, OQAM has no gain or has a smaller gain compared with QAM. Therefore, the network device may use the QAM DFT-s-OFDM waveform for signal transmission.

When the value of the transmission bandwidth factor is less than the first threshold of the transmission bandwidth factor, it indicates that the signal is transmitted through narrowband. Still refer to Table 3. Table 3 shows OBO values in narrowband. It is assumed that the value of the transmission bandwidth factor is 0.096, the value is less than the first threshold 0.6 of the transmission bandwidth factor, indicating that the network device performs narrowband transmission. When the value of the roll-off factor is greater than or equal to 0.2, OQAM has a larger gain compared with QAM. Therefore, when the value of the roll-off factor is greater than or equal to 0.2, the network device may use the OQAM DFT-s-OFDM waveform for signal transmission. When the value of the roll-off factor is less than 0.2, OQAM has a smaller gain compared with QAM. Therefore, when the value of the roll-off factor is less than 0.2, the network device may use the QAM DFT-s-OFDM waveform for signal transmission.

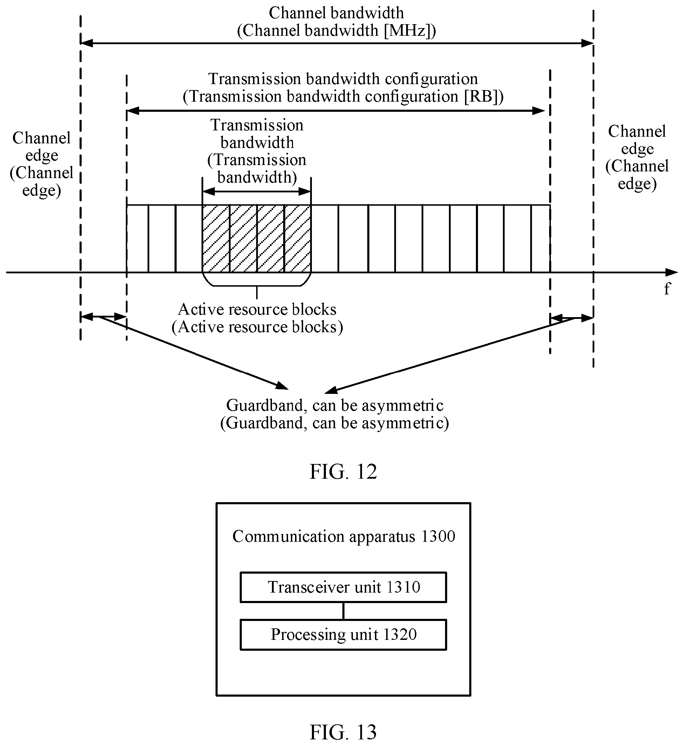

The following describes in detail the transmission bandwidth factor mentioned above. The transmission bandwidth factor is defined as the transmission bandwidth and a maximum transmission bandwidth (Maximum transmission bandwidth) allowed within a channel bandwidth (channel bandwidth). FIG. 12 is a diagram of a transmission bandwidth, a channel bandwidth, and a maximum transmission bandwidth. Section 5.3.2 in the 5G NR protocol 38.101 provides maximum transmission bandwidth configurations for different transmission bandwidths. For example, when the channel bandwidth is 800 MHz and a subcarrier spacing is 960 kHz, the maximum transmission bandwidth is 62 RBs. If the transmission bandwidth is 60 RBs, the transmission bandwidth factor is 60/62=0.968. A larger transmission bandwidth factor indicates a wider transmission bandwidth, and a smaller transmission bandwidth factor indicates a narrower transmission bandwidth.

The foregoing describes in detail how the network device selects to use the OQAM DFT-s-OFDM waveform for transmission or the QAM DFT-s-OFDM waveform for transmission when the SEM is the dominant factor in the OBO value. Based on Table 2 to Table 7, it can be further learned that the OBO value is also related to an OBW. It can be learned from Table 2 and Table 3 that, in most cases, impact of the OBW on the OBO value is second only to impact of the SEM on the OBO value.

The following describes some cases in which the impact of the OBW on the OBO value may exceed the impact of the SEM on the OBO value. One case is that a quantity of antennas is small. In this case, to achieve maximum output power (maximum output power), an OBO for SEM value is small.

Table 9 shows OBO for SEM values corresponding to eight antennas. As can be seen, the OBO for SEM value is lower than an OBO for OBW value.

**Table 9 OBO values corresponding to 20 antennas and 8 antennas of QPSK DFT-s-OFDM and offset QPSK DFT-s-OFDM in broadband**

| FDSS | Scheme | Roll-off factor | OBO for EVM | OBO for ACLR | OBO for IBE | OBO for OBW | OBO for SEM (20 antennas) | OBO for SEM (8 antennas) |
|---|---|---|---|---|---|---|---|---|
| Rectangular window | QAM | 0 | 0.73 | 0 | 1.44 | 3.72 | 3.4 | 0.27 |
| | OQAM | | 0.97 | 0 | 2.13 | 3.80 | 3.63 | 0.4 |
| RRC | QAM | 0.2 | 0 | 0 | 1.06 | 2.76 | 2.75 | 0.02 |
| | OQAM | | 0.1 | 0 | 2.11 | 2.37 | 3.15 | 0.01 |
| | QAM | 0.5 | 0 | 0 | 0 | 2.40 | 2.96 | 0.38 |
| | OQAM | | 0 | 0 | 1.33 | 0 | 1.54 | 0.01 |
| | QAM | 1 | 0 | 0 | 0 | 3.03 | 4.08 | 1.04 |
| | OQAM | | 0 | 0 | 0 | 0 | 0.01 | 0.01 |

Therefore, in some embodiments, the network device may determine, based on a first threshold of the modulation order and a value of the modulation order, whether the OBW may be a dominant factor in the OBO value. When the value of the modulation order is less than or equal to the first threshold of the modulation order, the assumption that the OBW is the dominant factor in the OBO value may be true.

For example, based on Table 8, the first threshold of the modulation order may be set to 2. When the value of the modulation order is less than or equal to 2, a QPSK constellation transmission modulation scheme is used for transmission. With reference to Table 2 to Table 7, when the QPSK modulation scheme is used for transmission, the assumption that OBW is basically the dominant factor in the OBO value may be true.

In some embodiments, when the value of the modulation order is less than or equal to the threshold of the modulation order, the network device further needs to determine that the SEM is not the dominant factor in the OBO value but the OBW is the dominant factor in the OBO value.

In a possible implementation, the terminal device may report a capability to the network device, and the network device determines, based on the capability reported by the terminal device, that the OBW is the dominant factor in the OBO value. For example, the terminal device may report a quantity of antennas to the network device.

Further, when the SEM is not the dominant factor in the OBO value but the OBW is the dominant factor in the OBO value, based on the OBO for OBW column in Table 2 and Table 3, it can be learned that, for a broadband transmission case, when the roll-off factor is small or moderate, for example, 0 to 0.333, OQAM has no gain compared with QAM, and in this case, the QAM waveform is selected. For a narrowband transmission case, OQAM always has no gain compared with QAM, and in this case, the QAM waveform is selected.

Therefore, the network device may determine a roll-off factor during signal transmission based on a transmission bandwidth and a quantity of symbols carried in the transmission waveform. When a value of the roll-off factor is greater than or equal to a first threshold of the roll-off factor, the network device may use the OQAM DFT-s-OFDM waveform for signal transmission. When the value of the roll-off factor is less than the first threshold of the roll-off factor, the network device may use the QAM DFT-s-OFDM waveform for signal transmission.

A manner of determining the roll-off factor is described above, and details are not described herein again.

When the OBW is the dominant factor in the OBO value, the first threshold of the roll-off factor is related to a transmission bandwidth factor. In other words, a first threshold of the roll-off factor when a signal is transmitted through broadband may be different from a first threshold of the roll-off factor when the signal is transmitted through narrowband.

For example, when the signal is transmitted through broadband, the first threshold of the roll-off factor may be set to 0.333; or when the signal is transmitted through narrowband, the first threshold of the roll-off factor may be set to 1.

When a value of the transmission bandwidth factor is greater than or equal to a first threshold of the transmission bandwidth factor, it indicates that the signal is transmitted through broadband. Still refer to Table 2. It is assumed that the first threshold of the transmission bandwidth factor is 0.6, and the value of the transmission bandwidth factor is 0.96, indicating that the network device performs broadband transmission. Based on Table 2, when the value of the roll-off factor is greater than or equal to 0.333, OQAM has a larger gain compared with QAM. Therefore, when the value of the roll-off factor is greater than or equal to 0.333, the network device may use the OQAM DFT-s-OFDM waveform for signal transmission. When the value of the roll-off factor is less than 0.333, OQAM has no gain or has a smaller gain compared with QAM. Therefore, when the value of the roll-off factor is less than 0.333, the network device may use the QAM DFT-s-OFDM waveform for signal transmission.

When the value of the transmission bandwidth factor is less than the first threshold of the transmission bandwidth factor, it indicates that the signal is transmitted through narrowband. Still refer to Table 3. Table 3 shows OBO values in narrowband. It is assumed that the value of the transmission bandwidth factor is less than 0.6, indicating that the network device performs narrowband transmission. Based on Table 3, OQAM always has no gain compared with QAM, and in this case, the QAM waveform is selected.

The foregoing describes in detail how the network device selects to use the OQAM DFT-s-OFDM waveform for transmission or the QAM DFT-s-OFDM waveform for transmission when the OBW is the dominant factor in the OBO value. Based on Table 2 to Table 7, it can be further learned that the OBO value is also related to IBE. It can be learned from Table 3 that when the roll-off factor is large, for example, 0.5, both OBO for OBW and OBO for EVM are zero. However, in this case, OBO for IBE is still not zero, that is, in this case, the IBE is a dominant factor. Therefore, when the network device performs narrowband transmission and low-order modulation, that the IBE is the dominant factor may be true.

In some embodiments, the network device may determine, based on a first threshold of the modulation order and a value of the modulation order, whether the IBE may be the dominant factor in the OBO value. When the value of the modulation order is less than or equal to the first threshold of the modulation order, the assumption that the IBE is the dominant factor in the OBO value may be true.

The IBE is the dominant factor only when the network device performs broadband transmission and low-order modulation. In this case, the network device further needs to determine a transmission bandwidth factor. Specifically, for a manner of determining the transmission bandwidth factor, refer to the foregoing descriptions. Details are not described herein again.

Further, based on Table 2 and Table 3, when the IBE is the dominant factor and the roll-off factor is large, a gain of OQAM is higher than a gain of QAM. In this case, the OQAM waveform may be selected. When the roll-off factor is small, OQAM has a smaller gain compared with QAM. In this case, the QAM waveform may be selected.

Therefore, the network device may determine a roll-off factor during signal transmission. When a value of the roll-off factor is greater than or equal to a first threshold of the roll-off factor, the network device may use the OQAM DFT-s-OFDM waveform for signal transmission. When the value of the roll-off factor is less than the first threshold of the roll-off factor, the network device may use the QAM DFT-s-OFDM waveform for signal transmission.

A manner of determining the roll-off factor is described above, and details are not described herein again.

When the IBE is the dominant factor in the OBO value, the first threshold of the roll-off factor is also related to a transmission bandwidth factor.

For example, when a signal is transmitted through broadband, the first threshold of the roll-off factor may be set to 0.8; and
when a value of the transmission bandwidth factor is greater than or equal to a first threshold of the transmission bandwidth factor, it indicates that the signal is transmitted through broadband. Still refer to Table 2. Table 2 shows OBO values in broadband. It is assumed that the value of the transmission bandwidth factor is greater than 0.6, indicating that the network device performs broadband transmission. Based on Table 2, when the value of the roll-off factor is greater than or equal to 0.8, OQAM has a larger gain compared with QAM. Therefore, when the value of the roll-off factor is greater than or equal to 0.8, the network device may use the OQAM DFT-s-OFDM waveform for signal transmission. When the value of the roll-off factor is less than 0.8, OQAM has a smaller gain compared with QAM. Therefore, when the value of the roll-off factor is less than 0.8, the network device may use the QAM DFT-s-OFDM waveform for signal transmission.

When the value of the transmission bandwidth factor is less than the first threshold of the transmission bandwidth factor, it indicates that the signal is transmitted through narrowband. Still refer to Table 3. Table 3 shows OBO values in narrowband. It is assumed that the value of the transmission bandwidth factor is less than 0.6, indicating that the network device performs narrowband transmission. Based on Table 3, when the value of the roll-off factor is greater than or equal to 0.6, OQAM has a larger gain compared with QAM. Therefore, when the value of the roll-off factor is greater than or equal to 0.6, the network device may use the OQAM DFT-s-OFDM waveform for signal transmission. When the value of the roll-off factor is less than 0.6, OQAM has a smaller gain compared with QAM. Therefore, when the value of the roll-off factor is less than 0.6, the network device may use the QAM DFT-s-OFDM waveform for signal transmission.

The foregoing describes in detail how the network device selects to use the OQAM DFT-s-OFDM waveform for transmission or the QAM DFT-s-OFDM waveform for transmission when the IBE is the dominant factor in the OBO value. Based on Table 2 to Table 7, it can be further learned that the OBO value is also related to an EVM. Specifically, it can be learned from Table 4 to Table 7 that, for a high-order MCS user, integrated OBO is mainly determined by OBO for EVM.

In some embodiments, the network device may determine, based on a second threshold of the modulation order and a value of the modulation order, whether the EVM may be a dominant factor in the OBO value. When the value of the modulation order is greater than or equal to the second threshold of the modulation order, the assumption that the EVM is the dominant factor in the OBO value may be true.

For example, based on Table 8, the threshold of the modulation order may be set to 4. Corresponding to 16QAM modulation, when the value of the modulation order is greater than or equal to 4, a 16QAM modulation scheme is used for transmission. With reference to Table 4 to Table 7, when the 16QAM modulation is used for transmission, the assumption that OBO for EVM is basically the dominant factor may be true.

Further, with reference to Table 4 to Table 7, regardless of narrowband transmission or broadband transmission, when the roll-off factor is small, OQAM has no gain or has a smaller gain compared with QAM. Therefore, when the roll-off factor is small, the QAM waveform is selected; or when the roll-off factor is large, the OQAM waveform is selected.

Therefore, the network device may determine a roll-off factor during signal transmission. When a value of the roll-off factor is greater than or equal to a second threshold of the roll-off factor, the network device may use the OQAM DFT-s-OFDM waveform for signal transmission. When the value of the roll-off factor is less than the second threshold of the roll-off factor, the network device may use the QAM DFT-s-OFDM waveform for signal transmission.

In some embodiments, the second threshold of the roll-off factor is related to a transmission bandwidth factor.

For example, when a signal is transmitted through broadband, the first threshold of the roll-off factor may be set to 0.4; or when a signal is transmitted through narrowband, the first threshold of the roll-off factor may be set to 0.35.

When a value of the transmission bandwidth factor is greater than or equal to a first threshold of the transmission bandwidth factor, it indicates that the signal is transmitted through broadband. For example, refer to Table 4, it is assumed that the first threshold of the transmission bandwidth factor is 0.6, and the value of the transmission bandwidth factor is 0.96, indicating that the network device performs broadband transmission. Based on Table 4, when the value of the roll-off factor is greater than or equal to 0.4, OQAM has a larger gain compared with QAM. Therefore, when the value of the roll-off factor is greater than or equal to 0.4, the network device may use the OQAM DFT-s-OFDM waveform for signal transmission. When the value of the roll-off factor is less than 0.4, OQAM has no gain or has a smaller gain compared with QAM. Therefore, when the value of the roll-off factor is less than 0.4, the network device may use the QAM DFT-s-OFDM waveform for signal transmission.

When the value of the transmission bandwidth factor is less than the first threshold of the transmission bandwidth factor, it indicates that the signal is transmitted through narrowband. For example, refer to Table 5. Table 5 shows OBO values in narrowband, and it is assumed that the value of the transmission bandwidth factor is 0.096. When the value of the roll-off factor is greater than or equal to 0.35, OQAM has a larger gain compared with QAM. Therefore, when the value of the roll-off factor is greater than or equal to 0.35, the network device may use the OQAM DFT-s-OFDM waveform for signal transmission. When the value of the roll-off factor is less than 0.35, OQAM has a smaller gain compared with QAM. Therefore, when the value of the roll-off factor is less than 0.35, the network device may use the QAM DFT-s-OFDM waveform for signal transmission.

S1120a. The network device sends a signal to the terminal device.

Based on the transmission waveform determined in step S1110a, the signal is generated and the signal is transmitted to the terminal device based on the transmission waveform. Transmitting the signal may also be understood as sending a signal of the transmission waveform.

S1130a. The network device sends first indication information to the terminal device, where the first indication information indicates the transmission waveform.

After determining the transmission waveform of the signal based on step S1110a, the network device sends the first indication information to the terminal device, where the first indication information indicates the transmission waveform.

The first indication information may be configured by the network device by using higher layer signaling or physical layer signaling. The higher layer signaling may include, for example, radio resource control (radio resource control, RRC) signaling or receiving and sending medium access control-control element (medium access control-control element, MAC-CE) signaling. The physical layer signaling may include, for example, downlink control information (downlink control information, DCI) or signaling transmitted through a physical downlink channel. The physical downlink channel may be, for example, a physical downlink control channel (physical downlink control channel, PDCCH) or a physical downlink shared channel (physical downlink shared channel, PDSCH).

S1140a. The terminal device demodulates the received signal based on the first indication information.

The terminal device may obtain the signal based on the first indication information. To be specific, the terminal device obtains the signal based on the transmission waveform. Obtaining the signal may also be understood as demodulating the received signal.

The terminal device may further send a signal to the network device based on the transmission waveform indicated by the first indication information, and the network device demodulates the received signal based on the determined transmission waveform.

According to the communication method 1100(a) provided in this application, the network device may determine the transmission waveform of the signal based on a specified threshold of the modulation order and a specified threshold of the roll-off factor, to determine whether an existing protocol needs to be changed to use an OQAM DFT-s-OFDM waveform for signal transmission. If there is no OBO gain or an OBO gain is less than a threshold, the protocol does not need to be changed and an existing QAM DFT-s-OFDM waveform is used for signal transmission. If the OBO gain is greater than a threshold, in this case, the OQAM DFT-s-OFDM waveform is used, so that a better OBO gain can be obtained.

It should be noted that, according to the communication method provided in this application, OBO of a power amplifier can be reduced, thereby improving an output signal power of the power amplifier. A larger output power of the power amplifier indicates larger signal coverage. Therefore, a large output power of the power amplifier is conducive to coverage of high-frequency communication in the high-frequency communication field, and in a sensing scenario, a large output power of the power amplifier is conducive to increasing a power of an echo signal generated by reflection by a long-distance target.

In the foregoing implementation, waveform selection is performed by the network device, and then the terminal device is notified by using signaling. Certainly, in the foregoing implementation, the terminal device may also perform waveform selection, so that the network device does not need to notify, by using signaling, the terminal device of a waveform used to receive a signal, thereby reducing signaling overheads.

In the foregoing implementation, the first threshold of the modulation order, the second threshold of the modulation order, the first threshold of the roll-off factor, and the second threshold of the roll-off factor may be preset in a protocol. The terminal device and the network device may determine a transmission waveform of a signal based on the thresholds of the modulation order and the thresholds of the roll-off factor that are preset in a protocol. In this manner, the network device does not need to notify the terminal device of a used transmission waveform by using signaling, thereby reducing signaling overheads.

For example, FIG. 11b is a schematic flowchart of interaction in another communication method according to an embodiment of this application. The method 1100(b) may be applied to the foregoing scenario, and certainly may be applied to another communication scenario. This is not limited in this embodiment of this application.

In this embodiment of this application, the method 1100(b) may also be performed by a first communication device. Unless otherwise specified, the "first communication device" in this application may be the first communication device (for example, a network device or a terminal device), or may be a component (for example, a processor, a chip, or a chip system) in the first communication device, or may be a logical module or software that can implement all or a part of functions of the first communication device. An execution body of the communication method is not limited in this application.

The following describes the method 1100(b) by using an example in which a terminal device and a network device are used as execution bodies for performing steps in the method 1100(b).

As shown in FIG. 11b, the method 1100(b) includes the following steps.

S1110b. The network device determines a transmission waveform, where the transmission waveform is related to a threshold of a first parameter, and the first parameter includes a modulation order and a roll-off factor.

For a specific implementation of step S1110b, refer to the descriptions of S1110a. Details are not described herein again.

S1120b. The terminal device determines the transmission waveform, where the transmission waveform is related to the threshold of first parameter, and the first parameter includes the modulation order and the roll-off factor.

A manner in which the terminal device determines the transmission waveform based on a threshold of the modulation order and a threshold of the roll-off factor is consistent with a manner in which the network device determines the transmission waveform based on the threshold of the modulation order and the threshold of the roll-off factor. For details, refer to the descriptions of S1110a. Details are not described herein again.

S1130b. The network device sends a signal to the terminal device.

Based on the transmission waveform determined by the network device, the network device transmits the signal to the terminal device. Transmitting the signal may also be understood as sending a signal of the transmission waveform.

S1140b. The terminal device demodulates the received signal.

The terminal device may determine the transmission waveform based on step S1120b. In this case, in step S1140b, the terminal device may directly obtain the signal based on the transmission waveform. Obtaining the signal may also be understood as demodulating the received signal. The network device does not need to send first indication information to the terminal device to indicate the transmission waveform, thereby reducing signaling overheads.

The terminal device may further send a signal to the network device based on the determined transmission waveform, and the network device demodulates the received signal based on the determined transmission waveform.

Optionally, in this embodiment of this application, the terminal device may further send a request message to the network device. The request message carries the transmission waveform determined by the terminal device. The network device may determine, based on the request message of the terminal device, whether the terminal device can perform signal transmission based on the determined transmission waveform.

It should be understood that, division into manners, cases, categories, and embodiments in embodiments of this application are merely for ease of description, and should not constitute a special limitation. Features in various manners, categories, cases, and embodiments may be combined without contradiction.

It should be further understood that, the foregoing descriptions are merely intended to help a person skilled in the art better understand embodiments of this application, instead of limiting the scope of embodiments of this application. It is clear that a person skilled in the art may make various equivalent modifications or changes based on the foregoing examples. For example, some steps in the foregoing method may be unnecessary, or some new steps may be added. Alternatively, any two or more of the foregoing embodiments are combined. Such modifications, changes, or combined solutions also fall within the scope of embodiments of this application.

It should be further understood that the foregoing descriptions of embodiments of this application emphasize differences between embodiments. For same or similar parts that are not mentioned, refer to these embodiments. For brevity, details are not described herein again.

It should be further understood that sequence numbers of the foregoing processes do not mean an execution sequence. The execution sequence of the processes should be determined based on functions and internal logic of the processes, and should not constitute any limitation on implementation processes of embodiments of this application.

It should be further understood that, in embodiments of this application, "preset" and "predefined" may be implemented by pre-storing corresponding code or a corresponding table in a device (for example, including a terminal device and a network device), or in another manner that may be used to indicate related information. A specific implementation thereof is not limited in this application.

It should be further understood that in embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

The foregoing describes in detail examples of the communication method provided in this application. It may be understood that, to implement the foregoing functions, an authentication server function, the terminal device, and unified data management include corresponding hardware structures and/or software modules for performing the functions. A person skilled in the art should be easily aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

The following describes a communication apparatus according to this application.

For example, FIG. 13 is a block diagram of a communication apparatus 1300 according to an embodiment of this application. The communication apparatus 1300 may correspond to the network device described in the embodiments of the method 1100(a) and the method 1100(b), or may be used in a chip or a component of the network device. In addition, modules or units in the communication apparatus 1300 are respectively configured to perform actions or processing processes performed by the network device in the embodiments of the method 1100(a) and the method 1100(b).

As shown in FIG. 13, the communication apparatus 1300 includes a transceiver unit 1310 and a processing unit 1320. The transceiver unit 1310 is configured to perform specific signal receiving and sending under driving of the processing unit 1320.

In some embodiments:
The processing unit 1320 is configured to determine a transmission waveform of a signal, where the transmission waveform is related to a threshold of a first parameter, and the first parameter includes a modulation order and a roll-off factor, where the transmission waveform is a quadrature amplitude modulation discrete Fourier transform-spread-orthogonal frequency division multiplexing QAM DFT-s-OFDM waveform or an offset quadrature amplitude modulation discrete Fourier transform-spread-orthogonal frequency division multiplexing OQAM DFT-s-OFDM waveform, and the roll-off factor is determined based on a transmission bandwidth and a quantity of symbols carried in the transmission waveform.

The transceiver unit 1310 is configured to transmit or obtain the signal based on the transmission waveform.

The communication apparatus provided in this application may determine the transmission waveform of the signal based on a specified threshold of the modulation order and a specified threshold of the roll-off factor, to determine whether an existing protocol needs to be changed to use an OQAM DFT-s-OFDM waveform for signal transmission. If there is no OBO gain or an OBO gain is less than a threshold, the protocol does not need to be changed and an existing QAM DFT-s-OFDM waveform is used for signal transmission. If the OBO gain is greater than a threshold, in this case, the OQAM DFT-s-OFDM waveform is used, so that a better OBO gain can be obtained.

It should be noted that the communication apparatus corresponds to a chip or a component of the network device.

Optionally, when a value of the modulation order is less than or equal to a first threshold of the modulation order, and a value of the roll-off factor is greater than or equal to a first threshold of the roll-off factor, the transmission waveform is the OQAM DFT-s-OFDM waveform.

Optionally, when the value of the modulation order is less than or equal to the first threshold of the modulation order, and the value of the roll-off factor is less than the first threshold of the roll-off factor, the transmission waveform is the QAM DFT-s-OFDM waveform.

Optionally, the first threshold of the roll-off factor is related to a transmission bandwidth factor.

Optionally, the first threshold of the modulation order is 2.

Optionally, when a value of the modulation order is greater than or equal to a second threshold of the modulation order, and a value of the roll-off factor is greater than or equal to a second threshold of the roll-off factor, the transmission waveform is the OQAM DFT-s-OFDM waveform.

Optionally, when the value of the modulation order is greater than or equal to the second threshold of the modulation order, and the value of the roll-off factor is less than the second threshold of the roll-off factor, the transmission waveform is the QAM DFT-s-OFDM waveform.

Optionally, the second threshold of the roll-off factor is related to a transmission bandwidth factor.

Optionally, the second threshold of the modulation order is 4.

Optionally, the transceiver unit 1310 is further configured to send or receive first indication information, where the first indication information indicates the transmission waveform.

It should be understood that, for a specific process of performing the foregoing corresponding steps by the units in the communication apparatus 1300, refer to the foregoing descriptions of the network device with reference to the related embodiments of the method 1100(a), the method 1100(b), FIG. 11a, and FIG. 11b. For example, the transceiver unit 1310 may perform receiving and sending steps in the foregoing method embodiments, and the processing unit 1320 may perform a step other than receiving and sending. Various specific processing is described in the method embodiments. For brevity, details are not described herein again.

It should be understood that the communication apparatus may further include a storage unit. The storage unit is configured to store instructions executed by the transceiver unit 1310 and the processing unit 1320. The storage unit stores instructions, the processing unit 1320 is configured to execute the instructions stored in the storage unit, and the transceiver unit 1310 is configured to perform specific signal receiving and sending under driving of the processing unit 1320.

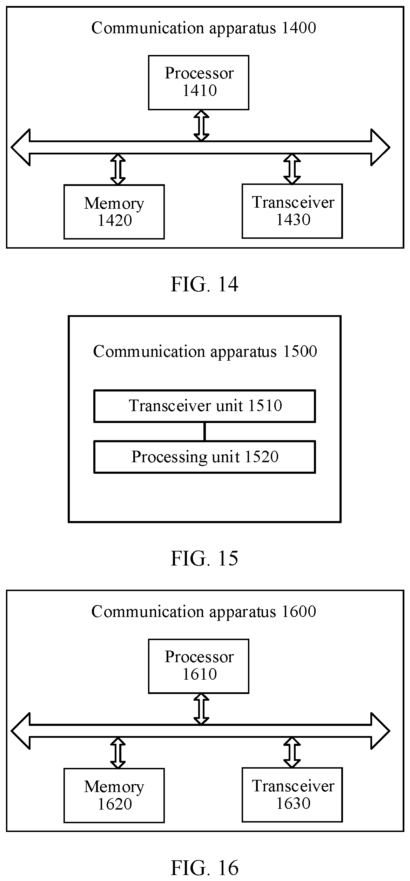

It should be understood that the transceiver unit 1310 may be a transceiver, an input/output interface, or an interface circuit. The storage unit may be a memory. The processing unit 1320 may be implemented as a processor. FIG. 14 is a block diagram of another communication apparatus 1400 according to an embodiment of this application. As shown in FIG. 14, the communication apparatus 1400 may include a processor 1410, a memory 1420, and a transceiver 1430.

The communication apparatus 1300 shown in FIG. 13 or the communication apparatus 1400 shown in FIG. 14 can implement steps performed by the network device in the embodiments of the method 1100(a) and the method 1100(b). For similar descriptions, refer to the descriptions in the foregoing corresponding methods. To avoid repetition, details are not described herein again.

It should be further understood that the communication apparatus 1300 shown in FIG. 13 or the communication apparatus 1400 shown in FIG. 14 may be the network device.

FIG. 15 is a block diagram of a communication apparatus 1500 according to an embodiment of this application. The communication apparatus 1500 may correspond to the terminal device described in the method 1100(a) and the method 1100(b), or may be a chip or a component used in the terminal device. In addition, modules or units in the communication apparatus 1500 are respectively configured to perform actions or processing processes performed by the terminal device in the method 1100(a) and the method 1100(b).

As shown in FIG. 15, the communication apparatus 1500 may include a transceiver unit 1510 and a processing unit 1520. The transceiver unit 1510 is configured to perform specific signal receiving and sending under driving of the processing unit 1520.

In some embodiments:
The processing unit 1520 is configured to determine a transmission waveform of a signal, where the transmission waveform is related to a threshold of a first parameter, and the first parameter includes a modulation order and a roll-off factor, where the transmission waveform is a quadrature amplitude modulation discrete Fourier transform-spread-orthogonal frequency division multiplexing QAM DFT-s-OFDM waveform or an offset quadrature amplitude modulation discrete Fourier transform-spread-orthogonal frequency division multiplexing OQAM DFT-s-OFDM waveform, and the roll-off factor is determined based on a transmission bandwidth and a quantity of symbols carried in the transmission waveform.

The transceiver unit 1510 is configured to transmit or obtain the signal based on the transmission waveform.

The communication apparatus provided in this application may determine the transmission waveform of the signal based on a specified threshold of the modulation order and a specified threshold of the roll-off factor, to determine whether an existing protocol needs to be changed to use an OQAM DFT-s-OFDM waveform for signal transmission. If there is no OBO gain or an OBO gain is less than a threshold, the protocol does not need to be changed and an existing QAM DFT-s-OFDM waveform is used for signal transmission. If the OBO gain is greater than a threshold, in this case, the OQAM DFT-s-OFDM waveform is used, so that a better OBO gain can be obtained.

It should be noted that the communication apparatus corresponds to a chip or a component of the network device.

Optionally, when a value of the modulation order is less than or equal to a first threshold of the modulation order, and a value of the roll-off factor is greater than or equal to a first threshold of the roll-off factor, the transmission waveform is the OQAM DFT-s-OFDM waveform.

Optionally, when the value of the modulation order is less than or equal to the first threshold of the modulation order, and the value of the roll-off factor is less than the first threshold of the roll-off factor, the transmission waveform is the QAM DFT-s-OFDM waveform.

Optionally, the first threshold of the roll-off factor is related to a transmission bandwidth factor.

Optionally, the first threshold of the modulation order is 2.

Optionally, when a value of the modulation order is greater than or equal to a second threshold of the modulation order, and a value of the roll-off factor is greater than or equal to a second threshold of the roll-off factor, the transmission waveform is the OQAM DFT-s-OFDM waveform.

Optionally, when the value of the modulation order is greater than or equal to the second threshold of the modulation order, and the value of the roll-off factor is less than the second threshold of the roll-off factor, the transmission waveform is the QAM DFT-s-OFDM waveform.

Optionally, the second threshold of the roll-off factor is related to a transmission bandwidth factor.

Optionally, the second threshold of the modulation order is 4.

Optionally, the transceiver unit 1510 is further configured to send or receive first indication information, where the first indication information indicates the transmission waveform.

It should be understood that, for a specific process of performing the foregoing corresponding steps by the units in the communication apparatus 1500, refer to the related descriptions of the terminal device with reference to the related embodiments of the method 1100(a) and the method 1100(b). For example, the transceiver unit 1510 may perform receiving and sending steps in the foregoing method embodiments, and the processing unit 1520 may perform a processing step other than receiving and sending. Various specific processing methods are described in the method embodiments. For brevity, details are not described herein again.

Optionally, the transceiver unit 1510 may include a receiving unit (module) and a sending unit (module), configured to perform steps of receiving information and sending information by the terminal device in the embodiments of the method 1100(a) and the method 1100(b).

It should be understood that the transceiver unit 1510 may be a transceiver, an input/output interface, or an interface circuit. The storage unit may be a memory. The processing unit 1520 may be implemented as a processor. FIG. 16 is a block diagram of another communication apparatus 1600 according to an embodiment of this application. As shown in FIG. 16, the communication apparatus 1600 may include a processor 1610, a memory 1620, and a transceiver 1630.

The communication apparatus 1500 shown in FIG. 15 or the communication apparatus 1600 shown in FIG. 16 can implement steps performed by the terminal device in the embodiment of the method 1100. For similar descriptions, refer to the descriptions in the foregoing corresponding methods. To avoid repetition, details are not described herein again.

It should be further understood that the communication apparatus 1500 shown in FIG. 15 or the communication apparatus 1600 shown in FIG. 16 may be the terminal device.

It should be further understood that division into the units in the apparatus is merely logical function division. During actual implementation, all or a part of the units may be integrated into one physical entity, or may be physically separate. In addition, all the units in the apparatus may be implemented in a form of software invoked by a processing element, or may be implemented in a form of hardware; or a part of units may be implemented in a form of software invoked by a processing element, and a part of units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. The processing element herein may also be referred to as a processor, and may be an integrated circuit having a signal processing capability. In an implementation process, steps in the foregoing methods or the foregoing units may be implemented by using a hardware integrated logic circuit in the processor element, or may be implemented in a form of software invoked by the processing element.

In an example, the unit in any one of the foregoing apparatuses may be one or more integrated circuits configured to implement the foregoing methods, for example, one or more application-specific integrated circuits (application-specific integrated circuits, ASICs), one or more digital signal processors (digital signal processors, DSPs), one or more field programmable gate arrays (field programmable gate arrays, FPGAs), or a combination of at least two of these integrated circuit forms. For another example, when the unit in the apparatus may be implemented in a form of a program scheduled by a processing element, the processing element may be a general-purpose processor, for example, a central processing unit (central processing unit, CPU) or another processor that may invoke the program. For still another example, the units may be integrated and implemented in a form of a system-on-chip (system-on-chip, SoC).

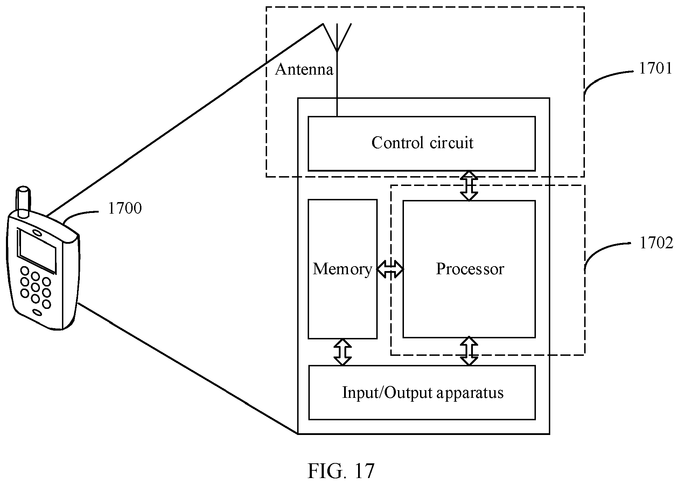

FIG. 17 is a diagram of a structure of a terminal device 1700 according to this application. The terminal device may be configured to implement functions of the terminal device in the foregoing methods. The communication apparatus 1500 or the communication apparatus 1600 may be configured in the terminal device 1700. Alternatively, the communication apparatus 1500 or the communication apparatus 1600 may be the terminal device 1700. Alternatively, the terminal device 1700 may perform actions performed by the terminal device in the method 1100(a) and the method 1100(b). Optionally, for ease of description, FIG. 17 shows only main components of the terminal device. As shown in FIG. 17, the terminal device 1700 includes a processor, a memory, a control circuit, an antenna, and an input/output apparatus.

The processor is mainly configured to process a communication protocol and communication data, control the entire terminal device, execute a software program, and process data of the software program, for example, is configured to support the terminal device in performing actions described in the foregoing embodiments of the indication method for transmitting a precoding matrix. The memory is mainly configured to store the software program and the data, for example, store a codebook described in the foregoing embodiments. The control circuit is mainly configured to perform conversion between a baseband signal and a radio frequency signal and process the radio frequency signal. The control circuit and the antenna together may also be referred to as a transceiver, and are mainly configured to receive and send a radio frequency signal in a form of an electromagnetic wave. The input/output apparatus, for example, a touchscreen, a display, or a keyboard, is mainly configured to receive data input by a user and output data to the user.

After the terminal device is powered on, the processor may read the software program in the storage unit, interpret and execute instructions of the software program, and process the data of the software program. When data needs to be sent in a wireless manner, the processor performs baseband processing on the to-be-sent data, and then outputs a baseband signal to a radio frequency circuit. The radio frequency circuit performs radio frequency processing on the baseband signal, and then sends, by using the antenna, a radio frequency signal in a form of an electromagnetic wave. When data is sent to the terminal device, the radio frequency circuit receives a radio frequency signal through the antenna, converts the radio frequency signal into a baseband signal, and outputs the baseband signal to the processor. The processor converts the baseband signal into data and processes the data.

A person skilled in the art may understand that for ease of description, FIG. 17 shows only one memory and one processor. In an actual terminal device, there may be a plurality of processors and a plurality of memories. The memory may also be referred to as a storage medium, a storage device, or the like. This is not limited in embodiments of this application.

For example, the processor may include a baseband processor and a central processing unit. The baseband processor is mainly configured to process the communication protocol and the communication data. The central processing unit is mainly configured to control the entire terminal device, execute the software program, and process the data of the software program. The processor in FIG. 17 integrates functions of the baseband processor and the central processing unit. A person skilled in the art may understand that the baseband processor and the central processing unit may alternatively be processors independent of each other, and are interconnected by using a technology like a bus. A person skilled in the art may understand that the terminal device may include a plurality of baseband processors to adapt to different network standards, the terminal device may include a plurality of central processing units to enhance a processing capability of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

For example, in embodiments of this application, the antenna having a transceiver function and the control circuit may be considered as a transceiver unit 1701 of the terminal device 1700, and the processor having a processing function may be considered as a processing unit 1702 of the terminal device 1700. As shown in FIG. 17, the terminal device 1700 includes the transceiver unit 1701 and the processing unit 1702. The transceiver unit may also be referred to as a transceiver, a transceiver machine, a transceiver apparatus, or the like. Optionally, a component that is in the transceiver unit 1701 and that is configured to implement a receiving function may be considered as a receiving unit, and a component that is in the transceiver unit 1701 and that is configured to implement a sending function may be considered as a sending unit. That is, the transceiver unit 1701 includes the receiving unit and the sending unit. For example, the receiving unit may also be referred to as a receiver, a receive machine, or a receiving circuit, and the sending unit may also be referred to as a transmitter, a transmit machine, or a transmitting circuit.

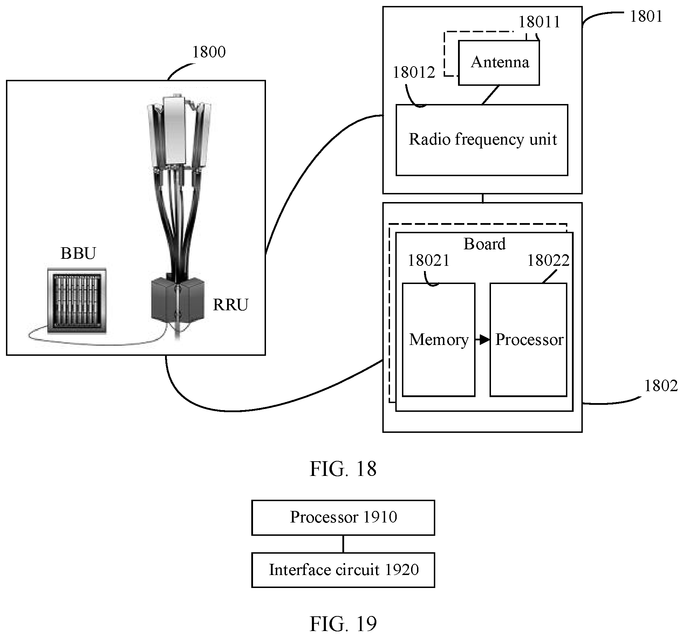

FIG. 18 is a diagram of a structure of a network device 1800 according to an embodiment of this application. The network device may be configured to implement functions of a serving base station, a source base station, and a target base station in the foregoing methods. The network device 1800 includes one or more radio frequency units, for example, a remote radio unit (remote radio unit, RRU) 1801 and one or more baseband units (baseband units, BBUs) (which may also be referred to as digital units (digital units, DUs)) 1802. The RRU 1801 may be referred to as a transceiver unit, a transceiver machine, a transceiver circuit, a transceiver, or the like, and may include at least one antenna 18011 and a radio frequency unit 18012. The RRU 1801 is mainly configured to receive and send a radio frequency signal and perform conversion between a radio frequency signal and a baseband signal, for example, configured to send a signaling message in the foregoing embodiments to a terminal device. The BBU 1802 is mainly configured to perform baseband processing, control a base station, and the like. The RRU 1801 and the BBU 1802 may be physically disposed together, or may be physically disposed separately, that is, in a distributed base station.

The BBU 1802 is a control center of the base station, may also be referred to as a processing unit, and is mainly configured to implement baseband processing functions, such as channel coding, multiplexing, modulation, and spectrum spreading. For example, the BBU (processing unit) 1802 may be configured to control the base station to perform an operation procedure related to the network device in the foregoing method embodiments.

In an example, the BBU 1802 may include one or more boards. A plurality of boards may jointly support a radio access network (for example, an LTE system or a 5G system) of a single access standard, or may respectively support radio access networks of different access standards. The BBU 1802 further includes a memory 18021 and a processor 18022. The memory 18021 is configured to store necessary instructions and data. For example, the memory 18021 stores a codebook and the like in the foregoing embodiments. The processor 18022 is configured to control the base station to perform a necessary action, for example, configured to control the base station to perform an operation procedure related to the network device in the foregoing method embodiments. The memory 18021 and the processor 18022 may serve one or more boards. In other words, a memory and a processor may be disposed on each board. Alternatively, a plurality of boards may share a same memory and a same processor. In addition, a necessary circuit may further be disposed on each board.

In a possible implementation, with development of a system-on-chip (system-on-chip, SoC) technology, all or a part of functions of the part 1802 and the part 1801 may be implemented by using the SoC technology, for example, implemented by using one base station function chip. The base station function chip integrates components such as a processor, a memory, and an antenna interface. A program of a base station-related function is stored in the memory, and the processor executes the program, to implement the base station-related function. Optionally, the base station function chip can also read from an external memory of the chip, to implement the base station-related function.

It should be further understood that division into the units in the apparatus is merely logical function division. During actual implementation, all or a part of the units may be integrated into one physical entity, or may be physically separate. In addition, all the units in the apparatus may be implemented in a form of software invoked by a processing element, or may be implemented in a form of hardware; or a part of units may be implemented in a form of software invoked by a processing element, and a part of units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. The processing element herein may also be referred to as a processor, and may be an integrated circuit having a signal processing capability. In an implementation process, steps in the foregoing methods or the foregoing units may be implemented by using a hardware integrated logic circuit in the processor element, or may be implemented in a form of software invoked by the processing element. In an example, a unit in any one of the foregoing apparatuses may be one or more integrated circuits configured to implement the foregoing methods, for example, one or more application-specific integrated circuits (application-specific integrated circuits, ASICs), one or more digital signal processors (digital signal processors, DSPs), one or more field programmable gate arrays (field programmable gate arrays, FPGAs), or a combination of at least two of these integrated circuit forms. For another example, when the unit in the apparatus may be implemented in a form of a program scheduled by a processing element, the processing element may be a general-purpose processor, for example, a central processing unit (central processing unit, CPU) or another processor that may invoke the program. For still another example, the units may be integrated and implemented in a form of a system-on-chip (system-on-chip, SoC).

An embodiment of this application further provides a chip system. As shown in FIG. 19, the chip system includes at least one processor 1910 and at least one interface circuit 1920. The processor 1910 and the interface circuit 1920 may be interconnected through a line. For example, the interface circuit 1920 may be configured to receive a signal from another apparatus (for example, the memory of the terminal device 1700). For another example, the interface circuit 1920 may be configured to send a signal to another apparatus (for example, the processor 1910). For example, the interface circuit 1920 may read instructions stored in a memory, and send the instructions to the processor 1910. When the instructions are executed by the processor 1910, the terminal device may be caused to perform steps performed by the terminal device in the foregoing embodiments. Certainly, the chip system may further include another discrete component. This is not specifically limited in embodiments of this application.

An embodiment of this application further provides a communication system. The system includes the network device and the terminal device that are provided in the foregoing method embodiments.

An embodiment of this application further provides a computer-readable storage medium, configured to store computer program code. The computer program includes instructions used for performing any communication method provided in the foregoing embodiments of this application. The readable medium may be a read-only memory (read-only memory, ROM) or a random access memory (random access memory, RAM). This is not limited in this embodiment of this application.

This application further provides a computer program product. The computer program product includes instructions. When the instructions are executed, a network device and a terminal device are caused to perform corresponding operations in the foregoing methods.

An embodiment of this application further provides a chip disposed in a communication apparatus. The chip includes a processing unit and a communication unit. The processing unit may be, for example, a processor, and the communication unit may be, for example, an input/output interface, a pin, or a circuit. The processing unit may execute computer instructions, so that the communication apparatus is caused to perform any communication method provided in the foregoing embodiments of this application.

Optionally, the computer instructions are stored in a storage unit.

Optionally, the storage unit is a storage unit in the chip, for example, a register or a cache. Alternatively, the storage unit may be a storage unit that is in the terminal and that is located outside the chip, for example, a ROM, another type of static storage device that can store static information and instructions, or a random RAM. Any processor mentioned above may be a CPU, a microprocessor, an ASIC, or one or more integrated circuits configured to control program execution of the feedback information transmission method. The processing unit and the storage unit may be decoupled, are disposed on different physical devices respectively, and are connected in a wired or wireless manner to implement respective functions of the processing unit and the storage unit, to support the system chip in implementing various functions in the foregoing embodiments. Alternatively, the processing unit and the memory may be coupled to a same device.

The terminal device, the computer-readable storage medium, the computer program product, or the chip provided in embodiments is configured to perform the corresponding method provided above. Therefore, for beneficial effects that can be achieved, refer to the beneficial effects of the corresponding method provided above. Details are not described herein again.

It may be understood that the memory in embodiments of this application may be a volatile memory or a non-volatile memory, or may include both a volatile memory and a non-volatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and is used as an external cache. There are a plurality of different types of RAMs, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In this application, names may be assigned to various objects such as messages/information/devices/network elements/systems/apparatuses/actions/operations/procedures/concepts. It may be understood that the specific names do not constitute a limitation on the related objects. The assigned names may vary with factors such as scenarios, contexts, or usage habits. Understanding of technical meanings of technical terms in this application should be determined mainly based on functions and technical effects embodied/performed by the technical terms in the technical solutions.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

A person of ordinary skill in the art may be aware that, units and algorithm steps of the examples described in combination with embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

All or some of the methods in embodiments of this application may be implemented by software, hardware, firmware, or any combination thereof. When software is used to implement the methods, all or a part of the methods may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, or another programmable apparatus. The computer programs or the instructions may be stored in a computer-readable storage medium, or may be transmitted through the computer-readable storage medium. The computer-readable storage medium may be any usable medium that can be accessed by the computer, or a data storage device, for example, a server, integrating one or more usable media.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. During actual implementation, there may be other division manners. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. A part or all of the units may be selected based on an actual requirement to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a readable storage medium, and includes several instructions for instructing a computer device (which may be a personal computer, a server, or a network device) to perform all or a part of steps of the methods described in embodiments of this application. The readable storage medium includes any medium that can store program code, for example, a USB flash drive, a removable hard disk, a ROM, a RAM, a magnetic disk, or an optical disc.

## Claims

1. A communication method, wherein the method comprises:
determining a transmission waveform of a signal, wherein the transmission waveform is related to a threshold of a first parameter, and the first parameter comprises a modulation order and a roll-off factor, wherein
the transmission waveform is a quadrature amplitude modulation discrete Fourier transform-spread-orthogonal frequency division multiplexing QAM DFT-s-OFDM waveform or an offset quadrature amplitude modulation discrete Fourier transform-spread-orthogonal frequency division multiplexing OQAM DFT-s-OFDM waveform, and the roll-off factor is determined based on a transmission bandwidth and a quantity of symbols carried in the transmission waveform; and
transmitting or obtaining the signal based on the transmission waveform.

2. The method according to claim 1, wherein
when a value of the modulation order is less than or equal to a first threshold of the modulation order, and a value of the roll-off factor is greater than or equal to a first threshold of the roll-off factor, the transmission waveform is the OQAM DFT-s-OFDM waveform.

3. The method according to claim 1 or 2, wherein
when the value of the modulation order is less than or equal to the first threshold of the modulation order, and the value of the roll-off factor is less than the first threshold of the roll-off factor, the transmission waveform is the QAM DFT-s-OFDM waveform.

4. The method according to claim 2 or 3, wherein the first threshold of the roll-off factor is related to a transmission bandwidth factor.

5. The method according to any one of claims 2 to 4, wherein the first threshold of the modulation order is 2.

6. The method according to claim 1, wherein when a value of the modulation order is greater than or equal to a second threshold of the modulation order, and a value of the roll-off factor is greater than or equal to a second threshold of the roll-off factor, the transmission waveform is the OQAM DFT-s-OFDM waveform.

7. The method according to claim 1 or 6, wherein when the value of the modulation order is greater than or equal to the second threshold of the modulation order, and the value of the roll-off factor is less than the second threshold of the roll-off factor, the transmission waveform is the QAM DFT-s-OFDM waveform.

8. The method according to claim 6 or 7, wherein the second threshold of the roll-off factor is related to a transmission bandwidth factor.

9. The method according to any one of claims 6 to 8, wherein the second threshold of the modulation order is 4.

10. The method according to any one of claims 1 to 9, wherein the method further comprises:
sending or receiving first indication information, wherein the first indication information indicates the transmission waveform.

11. A communication apparatus, wherein the apparatus comprises at least one processor and at least one memory, wherein
the at least one memory is configured to store a computer program or instructions; and
the at least one processor is configured to execute a part or all of the computer program or the instructions in the at least one memory, to cause the method according to any one of claims 1 to 10 to be performed.

12. A computer-readable storage medium, wherein the computer-readable storage medium stores a computer program or instructions; and when a computer reads and executes the computer program or the instructions, the method according to any one of claims 1 to 10 is caused to be performed.
